# EUROPEAN PATENT APPLICATION

(11) **EP 4 780 041 A1**
(43) Date of publication of application: **22.07.2026**
(21) Application number: 24870612.9
(22) Date of filing: 20.09.2024
(51) Int. Cl.: H04W 12/069, H04W 12/041, H04W 12/0433, H04W 36/36

(54) **COMMUNICATION METHOD AND APPARATUS**

(30) Priority: 28.09.2023 CN 202311290477
(71) Applicant: HUAWEI TECHNOLOGIES CO., LTD., Shenzhen 518129 (CN)
(72) Inventor: YOU, Chunhua, Shenzhen, Guangdong 518129 (CN); FAN, Qiang, Shenzhen, Guangdong 518129 (CN); GU, Zhifang, Shenzhen, Guangdong 518129 (CN)
(74) Representative: Isarpatent
(86) International application number: PCT/CN2024/120070
(87) International publication number: WO 2025/067068

(57) **Abstract**

A communication method and apparatus are provided. The method includes: A source base station sends a handover request message to a candidate base station, to request a configuration of a candidate cell; and the candidate base station obtains key information from a core network device based on the handover request message, and sends key information and the configuration of the candidate cell to the source base station. Alternatively, a source base station derives a security key for a candidate base station, and sends the security key to the candidate base station. According to the foregoing method, candidate base stations may respectively maintain key information, to avoid a security issue of inter-gNB LTM; or the source base station may maintain key information, and derive a security key for a candidate base station, to avoid a security issue of inter-gNB LTM.

## Description

### CROSS-REFERENCE TO RELATED APPLICATIONS

This application claims priority to Chinese Patent Application No. 202311290477.3, filed with the China National Intellectual Property Administration on September 28, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Cell switching is a very important feature in a communication system, and is triggered mainly by movement of a terminal when the terminal is in a radio resource control (radio resource control, RRC) connected state, so that the terminal switches to a neighboring cell with better signal quality before signal quality of a serving cell becomes unavailable for communication, thereby providing a continuous and uninterrupted communication service.

There are two types of cell switching: One is a layer 1/layer 2 based cell switching, which may be referred to as layer 1/layer 2 switch or layer 1/layer 2 triggered mobility (L1/L2 triggered mobility, LTM). The other is layer 3 based cell handover, which may be referred to as layer 3 handover (L3 handover).

Currently, in LTM, a terminal can switch between cells of a same base station, that is, intra-gNB LTM (intra-gNB LTM). However, in LTM, implementing cell switching between different base stations, that is, inter-gNB LTM (inter-gNB LTM), by the terminal still needs to be further studied.

### SUMMARY

This application provides a communication method and apparatus, to support inter-gNB LTM.

According to a first aspect, an embodiment of this application provides a communication method. The method is applied to a second access network device (for example, a candidate base station) or a module (for example, a chip or a circuit) in the second access network device. For example, the method is applied to the second access network device. In the method, the second access network device receives a first request message from a first access network device, where the first request message is for requesting a configuration of a first candidate cell; obtaining first key information and second key information from a core network device based on the first request message, where the first key information identifies the second key information, the second key information is used for security protection of data between a terminal device and the second access network device, and the first key information and the second key information correspond to the first candidate cell; and sending a first response message to the first access network device, where the first response message includes the configuration of the first candidate cell and the first key information.

According to the method, in inter-gNB LTM, a candidate base station maintains key information of the candidate base station, to avoid a security issue.

In a possible design, the method further includes: receiving a second request message from the first access network device, where the second request message is for requesting a configuration of a second candidate cell; and sending, to the first access network device, the configuration of the second candidate cell and first indication information, where the first indication information indicates key information corresponding to the second candidate cell, and the key information corresponding to the second candidate cell is the same as key information corresponding to the first candidate cell.

In this design, key information used by a plurality of candidate cells included by the candidate base station is shared. In this way, when the terminal accesses a candidate cell of the candidate base station, and needs to switch to another candidate cell of the candidate base station, a security key does not need to be updated, thereby reducing an intra-gNB handover delay. The security key is derived based on the key information.

In a possible design, the first request message includes key request information, and the key request information is for requesting (or indicating) the second access network device to obtain a security key corresponding to the first candidate cell.

In this design, when sending the first request message to the candidate base station, a source base station requests, by using the first request message, the candidate base station to obtain the security key corresponding to the first candidate cell. Therefore, in response to the key request information, the candidate base station obtains, from the key information maintained by the candidate base station, the key information corresponding to the first candidate cell, and derives the security key based on the key information corresponding to the first candidate cell.

In a possible design, the key request information includes information about a third candidate cell, the information about the third candidate cell is for obtaining the security key corresponding to the first candidate cell, and the third candidate cell is the same as or different from the first candidate cell.

In this design, a candidate cell for which the candidate base station determines to perform key derivation is indicated by the source base station by using the first request message.

In a possible design, the first response message further includes information about a third candidate cell corresponding to the first key information, the information about the third candidate cell is for obtaining the security key corresponding to the first candidate cell, and the third candidate cell is the same as or different from the first candidate cell.

In this design, a candidate cell for which the candidate base station determines to perform key derivation is determined by the candidate base station itself. In addition, the candidate base station indicates, to the source base station by using the first response message, the candidate cell for which key derivation is performed.

In a possible design, the method further includes: deriving, based on the second key information, a PCI of the third candidate cell, and a downlink frequency of the third candidate cell, the security key corresponding to the first candidate cell; and receiving data from the terminal device, and processing the data of the terminal device based on the security key corresponding to the first candidate cell.

In this design, after obtaining the first key information and the second key information from the key information maintained by the candidate base station, the candidate base station performs key derivation based on the first key information and the second key information, to obtain the security key. In this way, the candidate base station can implement security protection on data between the candidate base station and the terminal by using the security key.

In a possible design, obtaining the first key information and the second key information from the core network device based on the first request message includes: sending a third request message to the core network device based on the first request message, where the third request message is for requesting the key information corresponding to the first candidate cell; and receiving the first key information and the second key information from the core network device.

In this design, the candidate base station sends the third request message to the core network device, to request the core network device to allocate the first key information and the second key information.

According to a second aspect, an embodiment of this application provides a communication method. The method is applied to a first access network device (for example, a source base station) or a module (for example, a chip or a circuit) in the first access network device. For example, the method is applied to the first access network device. In the method, the first access network device sends a first request message to a second access network device, where the first request message is for requesting a configuration of a first candidate cell; and receives a first response message from the second access network device, where the first response message includes the configuration of the first candidate cell and first key information, and the first key information corresponds to the first candidate cell.

In a possible design, the method further includes: sending a second request message to the second access network device, where the second request message is for requesting a configuration of a second candidate cell; and receiving the configuration of the second candidate cell and first indication information from the second access network device, where the first indication information indicates key information corresponding to the second candidate cell, and the key information corresponding to the second candidate cell is the same as key information corresponding to the first candidate cell.

In a possible design, the first request message includes key request information, and the key request information is for requesting the second access network device to obtain a security key corresponding to the first candidate cell.

In a possible design, the key request information includes information about a third candidate cell, the information about the third candidate cell is for obtaining the security key corresponding to the first candidate cell, and the third candidate cell is the same as or different from the first candidate cell.

In a possible design, the first response message further includes information about a third candidate cell corresponding to the first key information, the information about the third candidate cell is for obtaining the security key corresponding to the first candidate cell, and the third candidate cell is the same as or different from the first candidate cell.

In a possible design, the method further includes: sending information about a first list, the first key information, and second indication information to a terminal device, where the first list includes identifiers of a plurality of candidate cells, the plurality of candidate cells include the first candidate cell, the first list corresponds to the first key information, and the second indication information indicates that an input parameter for key derivation corresponds to the first candidate cell; and sending a first handover message to the terminal device, where the first handover message indicates the terminal device to switch to a candidate cell in the first list.

In a possible design, the method further includes: sending a second handover message to the second access network device, where the second handover message indicates that switching to the candidate cell in the first list has been initiated.

According to a third aspect, an embodiment of this application provides a communication method. The method is applied to a terminal device or a module (for example, a chip or a circuit) in the terminal device. For example, the method is applied to the terminal device. In the method, the terminal device receives information about a first list, first key information, and second indication information from a first access network device, where the first list includes identifiers of a plurality of candidate cells, the plurality of candidate cells include a first candidate cell, and the second indication information indicates that an input parameter for key derivation corresponds to the first candidate cell; receives a first handover message from the first access network device, where the first handover message indicates the terminal device to switch to a candidate cell in the first list; accesses the candidate cell in the first list; derives, based on the first key information and the second indication information, a security key corresponding to the first candidate cell; and communicates with a second access network device in the candidate cell in the first list based on the security key.

In a possible design, deriving, based on the first key information and the second indication information, the security key corresponding to the first candidate cell includes: deriving, based on second key information corresponding to the first key information, a PCI of the first candidate cell, and a downlink frequency of the first candidate cell, the security key corresponding to the first candidate cell.

According to a fourth aspect, an embodiment of this application provides a communication method. The method is applied to a core network device (for example, an AMF) or a module (for example, a chip or a circuit) in the core network device. For example, the method is applied to the core network device. In the method, the core network device receives a third request message from a second access network device, where the third request message is for requesting key information; and sends first key information and second key information to the second access network device, where the first key information identifies the second key information, and the second key information is used for security protection of data between a terminal device and the second access network device.

In a possible design, the third request message further includes information about a third candidate cell corresponding to the first key information, the information about the third candidate cell is for obtaining a security key corresponding to a first candidate cell, and the third candidate cell is the same as or different from the first candidate cell.

It may be understood that the method requested to be protected in the second aspect, the third aspect, or the fourth aspect corresponds to that in the first aspect. For beneficial effects of related technical features in the second aspect or the third aspect, refer to the descriptions in the first aspect. Details are not described again.

According to a fifth aspect, an embodiment of this application provides a communication method. The method is applied to a first access network device (for example, a source base station) or a module (for example, a chip or a circuit) in the first access network device. For example, the method is applied to the first access network device. In the method, the first access network device sends a first request message to a second access network device, where the first request message is for requesting a configuration of a first candidate cell, and the first request message further indicates key information corresponding to the first candidate cell; and receives the configuration of the first candidate cell from the second access network device.

In the method, in inter-gNB LTM, the source base station maintains the key information, and derives a key for a candidate base station, thereby avoiding a security issue.

In a possible design, the method further includes: sending a second request message to the second access network device, where the second request message is for requesting a configuration of a second candidate cell; and receiving the configuration of the second candidate cell and first indication information from the second access network device, where the first indication information indicates key information corresponding to the second candidate cell, and the key information corresponding to the second candidate cell is the same as key information corresponding to the first candidate cell.

In this design, key information used by a plurality of candidate cells included by the candidate base station is shared. In this way, when the terminal accesses a candidate cell of the candidate base station, and needs to switch to another candidate cell of the candidate base station, a security key does not need to be updated, thereby reducing an intra-gNB handover delay. The security key is derived based on the key information.

In a possible design, the first request message includes a first security key corresponding to the first candidate cell and information about a cell corresponding to the first security key, and the first security key corresponding to the first candidate cell and the information about the cell corresponding to the first security key indicate the key information corresponding to the first candidate cell.

In a possible design, the cell corresponding to the first security key is the first candidate cell, and the method further includes: deriving the first security key based on second key information corresponding to first key information, a PCI of the first candidate cell, and a downlink frequency of the first candidate cell, where the first key information identifies the second key information, the second key information is used for security protection of data between a terminal device and the second access network device, and the first key information and the second key information correspond to the first candidate cell.

In a possible design, the method further includes: sending a third request message to a core network device, where the third request message is for requesting the key information corresponding to the first candidate cell; and receiving the first key information and the second key information from the core network device; or determining key information corresponding to a second security key as the first key information, where the second security key corresponds to a source cell.

In a possible design, the first request message further includes the first key information.

In a possible design, the method further includes: sending information about a first list, the first key information, and second indication information to the terminal device, where the first list includes identifiers of a plurality of candidate cells, the plurality of candidate cells include the first candidate cell, the first list corresponds to the first key information, and the second indication information indicates that an input parameter for key derivation corresponds to the first candidate cell; and sending a first handover message to the terminal device, where the first handover message indicates the terminal device to switch to a candidate cell in the first list.

In a possible design, the cell corresponding to the first security key is the first candidate cell, and the method further includes: deriving the first security key based on second key information, a PCI of the first candidate cell, and a downlink frequency of the first candidate cell, where the second key information is jointly identified by first key information and first extended key information, the second key information is used for security protection of data between the terminal device and the second access network device, and the first key information and the second key information correspond to the first candidate cell.

In this design, the source base station combines the extended key information and the first key information, to increase a quantity of pieces of key information that can be allocated by the source base station. When a quantity of candidate base stations is greater than a quantity of NCCs, extended key information needs to be additionally introduced, and the second key information is identified by using the first key information and the first extended key information, to avoid key misalignment.

In a possible design, the method further includes: sending a third request message to a core network device, where the third request message is for requesting the key information corresponding to the first candidate cell; and receiving the first key information, the first extended key information, and the second key information from the core network device; or determining key information corresponding to a second security key as the first key information, where the second security key corresponds to a source cell.

In a possible design, the first request message further includes the first key information and the first extended key information.

In a possible design, the method further includes: sending information about a first list, the first key information, the first extended key information, and second indication information to the terminal device, where the first list includes identifiers of a plurality of candidate cells, the plurality of candidate cells include the first candidate cell, the first list corresponds to the first key information and the first extended key information, and the second indication information indicates that an input parameter for key derivation corresponds to the first candidate cell; and sending a first handover message to the terminal device, where the first handover message indicates the terminal device to switch to a candidate cell in the first list.

In a possible design, the method further includes: sending a second handover message to the second access network device, where the second handover message indicates that switching to the candidate cell in the first list has been initiated.

According to a sixth aspect, an embodiment of this application provides a communication method. The method is applied to a second access network device (for example, a candidate base station) or a module (for example, a chip or a circuit) in the second access network device. For example, the method is applied to the second access network device. In the method, the second access network device receives a first request message from a first access network device, where the first request message is for requesting a configuration of a first candidate cell, and the first request message further indicates key information corresponding to the first candidate cell; and sends the configuration of the first candidate cell to the first access network device.

In a possible design, the method further includes: receiving a second request message from the first access network device, where the second request message is for requesting a configuration of a second candidate cell; and sending, to the first access network device, the configuration of the second candidate cell and first indication information, where the first indication information indicates key information corresponding to the second candidate cell, and the key information corresponding to the second candidate cell is the same as key information corresponding to the first candidate cell.

In a possible design, the first request message includes a first security key corresponding to the first candidate cell and information about a cell corresponding to the first security key, and the first security key corresponding to the first candidate cell and the information about the cell corresponding to the first security key indicate the key information corresponding to the first candidate cell.

In a possible design, the first request message further includes first key information, where the first key information identifies second key information, and the second key information is used for security protection of data between a terminal device and the second access network device.

In a possible design, the first request message further includes first key information and first extended key information, where the first key information and the first extended key information are for jointly identifying second key information, and the second key information is used for security protection of data between a terminal device and the second access network device.

In a possible design, the method further includes: receiving a second handover message from the first access network device, where the second handover message indicates that switching to a candidate cell included by the second access device has been initiated.

In a possible design, the method further includes: sending a fourth request message to a core network device; and receiving third key information and fourth key information from the core network device, where the third key information identifies the fourth key information, and the fourth key information is used for security protection of data between the terminal device and a third access network device.

In another possible design, the method further includes: sending a fourth request message to a core network device; and receiving third key information, second extended key information, and fourth key information from the core network device, where the third key information and the second extended key information are for jointly identifying the fourth key information, and the fourth key information is used for security protection of data between the terminal device and a third access network device.

According to a seventh aspect, an embodiment of this application provides a communication method. The method is applied to a terminal device or a module (for example, a chip or a circuit) in the terminal device. For example, the method is applied to the terminal device. In the method, the terminal device receives information about a first list, first key information, and second indication information from a first access network device, where the first list includes identifiers of a plurality of candidate cells, the plurality of candidate cells include a first candidate cell, and the second indication information indicates that an input parameter for key derivation corresponds to the first candidate cell; receives a first handover message from the first access network device, where the first handover message indicates the terminal device to switch to a candidate cell in the first list; accesses the candidate cell in the first list; derives, based on the first key information and the second indication information, a security key corresponding to the first candidate cell; and communicates with a second access network device in the candidate cell in the first list based on the security key.

In a possible design, deriving, based on the first key information and the second indication information, the security key corresponding to the first candidate cell includes: deriving, based on second key information corresponding to the first key information, a PCI of the first candidate cell, and a downlink frequency of the first candidate cell, the security key corresponding to the first candidate cell.

According to an eighth aspect, an embodiment of this application provides a communication method. The method is applied to a terminal device or a module (for example, a chip or a circuit) in the terminal device. For example, the method is applied to the terminal device. In the method, the terminal device receives information about a first list, first key information, first extended key information, and second indication information from a first access network device, where the first list includes identifiers of a plurality of candidate cells, the plurality of candidate cells include a first candidate cell, and the second indication information indicates that an input parameter for key derivation corresponds to the first candidate cell; receives a first handover message from the first access network device, where the first handover message indicates the terminal device to switch to a candidate cell in the first list; accesses the candidate cell in the first list; derives, based on the first key information, the first extended key information, and the second indication information, a security key corresponding to the first candidate cell; and communicates with a second access network device in the candidate cell in the first list based on the security key.

In a possible design, deriving, based on the first key information, the first extended key information, and the second indication information, the security key corresponding to the first candidate cell includes: deriving, based on the second key information, a PCI of the first candidate cell, and a downlink frequency of the first candidate cell, the security key corresponding to the first candidate cell, where the second key information is jointly identified by the first key information and the first extended key information.

It may be understood that the method requested to be protected in the sixth aspect, the seventh aspect, or the eighth aspect corresponds to the fifth aspect. For beneficial effects of related technical features in the sixth aspect, the seventh aspect, or the eighth aspect, refer to the descriptions in the first aspect. Details are not described again.

According to a ninth aspect, this application provides a communication apparatus. The communication apparatus has functions for implementing the first aspect to the eighth aspect. For example, the communication apparatus includes corresponding modules, units, or means for performing operations in the first aspect to the eighth aspect. The functions, the units, or the means may be implemented by software, may be implemented by hardware, or may be implemented by hardware executing corresponding software.

In a possible design, the communication apparatus includes a processing unit and a communication unit. The communication unit is configured to receive and send a signal, to implement communication between the communication apparatus and another apparatus. For example, the communication unit is configured to send system information to a terminal. The processing unit is configured to perform some internal operations of the communication apparatus. Functions performed by the processing unit and the communication unit may correspond to the operations in the first aspect to the eighth aspect.

In a possible design, the communication apparatus includes a processor, and the processor is configured to be coupled to a memory. The memory may store a necessary computer program or necessary instructions for implementing the functions in the first aspect to the eighth aspect. The processor may execute the computer program or the instructions stored in the memory. When the computer program or the instructions are executed, the communication apparatus is enabled to implement the method in any possible design or implementation in the first aspect to the eighth aspect.

In a possible design, the communication apparatus includes a processor and a memory, and the memory may store a necessary computer program or necessary instructions for implementing the functions in the first aspect to the eighth aspect. The processor may execute the computer program or the instructions stored in the memory. When the computer program or the instructions are executed, the communication apparatus is enabled to implement the method in any possible design or implementation in the first aspect to the eighth aspect.

In a possible design, the communication apparatus includes a processor and an interface circuit. The processor is configured to: communicate with another apparatus through the interface circuit, and perform the method in any possible design or implementation of the first aspect to the eighth aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and there may be one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a tenth aspect, this application provides a communication system. The communication system may include a first communication apparatus, a second communication apparatus, a third communication apparatus, and a fourth communication apparatus. The first communication apparatus is configured to perform the method according to the first aspect, the second communication apparatus is configured to perform the method according to the second aspect, the third communication apparatus is configured to perform the method according to the third aspect, and the fourth communication apparatus is configured to perform the method according to the fourth aspect. Alternatively, the first communication apparatus is configured to perform the method according to the fifth aspect, the second communication apparatus is configured to perform the method according to the sixth aspect, the third communication apparatus is configured to perform the method according to the seventh aspect, and the fourth communication apparatus is configured to perform the method according to the eighth aspect.

According to an eleventh aspect, this application provides a computer-readable storage medium. The computer storage medium stores computer-readable instructions, and when a computer reads and executes the computer-readable instructions, the computer is enabled to perform the method in any one of the possible designs of first aspect to the eighth aspect.

According to a twelfth aspect, this application provides a computer program product. When a computer reads and executes the computer program product, the computer is enabled to perform the method in any one of the possible designs of first aspect to the eighth aspect.

According to a thirteenth aspect, this application provides a chip. The chip includes a processor, and the processor is coupled to a memory, and is configured to read and execute a software program stored in the memory, to implement the method in any one of the possible designs of first aspect to the eighth aspect.

### BRIEF DESCRIPTION OF DRAWINGS

FIG. 1 is a diagram of an architecture of a communication system to which an embodiment of this application is applicable;
FIG. 2A is a diagram of a random access procedure according to an embodiment of this application;
FIG. 2B is another diagram of a random access procedure according to an embodiment of this application;
FIG. 3 is a schematic flowchart corresponding to a communication method;
FIG. 4 is a diagram of key derivation;
FIG. 5A is a schematic flowchart corresponding to a communication method according to Embodiment 1 of this application;
FIG. 5B is a diagram of a list according to Embodiment 1 of this application;
FIG. 6 is a schematic flowchart corresponding to a communication method according to Embodiment 2 of this application;
FIG. 7 is a schematic flowchart corresponding to a communication method according to Embodiment 3 of this application;
FIG. 8 is a schematic flowchart corresponding to a communication method according to Embodiment 4 of this application;
FIG. 9 is a possible example block diagram of an apparatus according to an embodiment of this application; and
FIG. 10 is a structural diagram of a communication apparatus according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

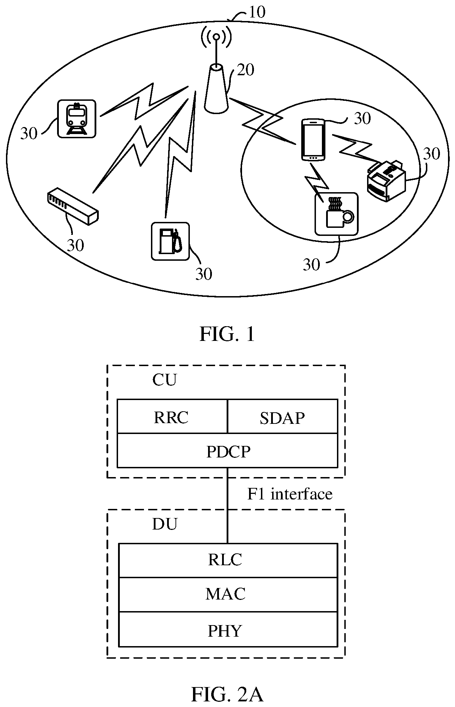

For ease of understanding embodiments of this application, a communication system shown in FIG. 1 is first used as an example to describe in detail a communication system applicable to embodiments of this application. As shown in FIG. 1, a communication system 10 includes one or more network devices 20 and one or more terminals 30. An interface between the network device and the terminal may be a Uu interface (or referred to as an air interface), and data transmission may be performed between the network device 20 and the terminal 30 by using an air interface resource. For example, the terminal may be located within communication coverage of one or more cells of the network device. There may be one or more cells (namely, serving cells of the terminal) that serve the terminal. When having a plurality of serving cells, the terminal may operate by using one or more of transmission technologies such as carrier aggregation (carrier aggregation, CA), dual connectivity (dual connectivity, DC), coordinated multipoint (coordinated multipoint, CoMP) transmission, or multiple transmission and reception point (multiple transmission and reception point, mTRP).

### (1) Terminal

The terminal may be a device that accesses the foregoing communication system and has a wireless transceiver function. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### (2) Network device

The network device is a device that is located on a network side of the foregoing communication system and has a wireless transceiver function.

For example, the network device in embodiments of this application may be an access point (access point, AP) in a Wi-Fi system, such as a home gateway, a router, a server, a switch, or a bridge, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a radio relay node, a radio backhaul node, or a transmission point (transmission and reception point, TRP, or transmission point, TP); may be a next generation NodeB (next generation NodeB, gNB) in a 5G system, or a network node that forms a gNB, for example, a central unit (central unit, CU), a distributed unit (distributed unit, DU), or a roadside unit (road side unit, RSU) having a base station function; or may be a satellite or a base station in various forms in the future.

### (3) Communication between a terminal and a network device

Communication between the terminal and the network device is performed in accordance with a specific protocol layer structure. For example, a control plane protocol layer structure may include an RRC layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of a 3rd generation partnership project (3rd generation partnership project, 3GPP).

Downlink data transmission is used as an example. Downlink data may be correspondingly encapsulated at each layer of the network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer.

From a perspective of the terminal, after a physical layer of the terminal receives a transport block from the network device, the transport block may be sequentially submitted from the physical layer to upper layers, and may be correspondingly decapsulated at each layer. In other words, processing performed at each layer of the terminal may be an inverse process of processing performed at each layer of the network device.

### (4) CU-DU split architecture

For example, in some possible network structures, the network device may include one or more central units (central unit, CU) and/or one or more distributed units (distributed unit, DU). A plurality of DUs may be centrally controlled by one CU. Such an architecture may be referred to as a CU-DU split architecture. For example, an interface between the CU and the DU may be referred to as an F1 interface. A control plane (control panel, CP) interface may be an F1-C interface, and a user plane (user panel, UP) interface may be an F1-U interface.

Processing functions of the CU and the DU may be divided based on protocol layers of a wireless network. For example, as shown in FIG. 2A, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

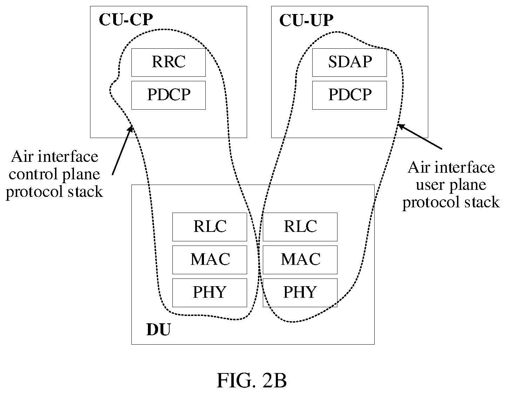

Further, a function of the CU may be implemented by a same entity, or may be implemented by different entities. For example, functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete a function of a RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to a plurality of coordinated CU-CPs. This improves flexibility of the CU-CP. FIG. 2B is a diagram of air interface protocol stack distribution. As shown in FIG. 2B, for both a user plane and a control plane, an air interface protocol stack may be that RLC, MAC, and PHY are on a DU, and PDCP and upper protocol layers are on a CU.

It should be understood that in the architectures shown in FIG. 2A and FIG. 2B, signaling generated by the CU may be sent to a terminal through the DU, or signaling generated by a terminal may be sent to the CU through the DU. The DU may transparently transmit the signaling to the terminal or the CU by directly encapsulating the signaling at a protocol layer without parsing the signaling. In the following embodiments, if transmission of such signaling between the DU and the terminal is performed, sending or receiving of the signaling by the DU includes such a scenario. For example, signaling at an RRC layer or the PDCP layer is finally processed to be physical layer data and is sent to the terminal, or is converted from received physical layer data. In the architecture, the signaling at the RRC layer or the PDCP layer may alternatively be considered to be sent by the DU, or sent by the DU and a radio frequency apparatus.

The communication system and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following first explains and describes related technical features in embodiments of this application. These explanations are intended to make embodiments of this application easier to understand, and should not be construed as a limitation on the protection scope claimed in this application.

### 1. Cell switching

There may be two types of cell switching. One is a layer 1/layer 2 (L1/L2) based cell switching, which may be referred to as L1/L2 handover or L1/L2 triggered mobility (L1/L2 triggered mobility, LTM). The other is layer 3 (L3) based cell switching, which may be referred to as L3 handover (L3 handover). L1 is a physical layer, L2 is any one or more layers of a MAC layer, an RLC layer, a PDCP layer, and an SDAP layer, and L3 is an RRC layer. It may be understood that the L1/L2 handover may also be understood as L1 and/or L2 handover. When the relationship is "and", operations related to the handover process are mainly completed at L1 and L2 together. When the relationship is "or", operations related to the handover process are mainly completed at L1 or L2. Because L1 and L2 reside at lower layers of a protocol stack than the RRC layer (L3), the L1/L2 handover may also be referred to as lower-layer handover, low-layer handover, or lower-level handover.

For the L3 handover, in the CU-DU split architecture, a CU receives a measurement result (where the measurement result is forwarded by a DU to the CU) of a terminal, determines, based on the measurement result, whether to initiate handover, and sends a handover command to the DU if determining to initiate the handover, and the DU sends the handover command to the terminal. This process involves communication interaction (that is, interaction on an F1 interface) between the CU and the DU, and a maximum transmission delay of the F1 interface is approximately 3 ms to 10 ms. Consequently, a specific handover delay is caused.

However, a handover decision for the L1/L2 handover is delivered from the CU to the DU. To be specific, the DU determines, based on a measurement result of the terminal, whether to initiate switch (LTM cell switch), and directly sends a handover command to the terminal, so that F1 interaction can be effectively reduced, and a handover delay can be reduced.

### 2. Cell switching scenario

As described above, a network device may include one or more CUs and one or more DUs. For example, the network device includes one CU and a plurality of DUs. The plurality of DUs may be centrally controlled by the CU, and each of the plurality of DUs includes one or more cells. It may be understood that "the DU includes one or more cells" may also be described as "the DU manages or controls one or more cells", "one or more cells of the DU", or "one or more cells belong to the DU".

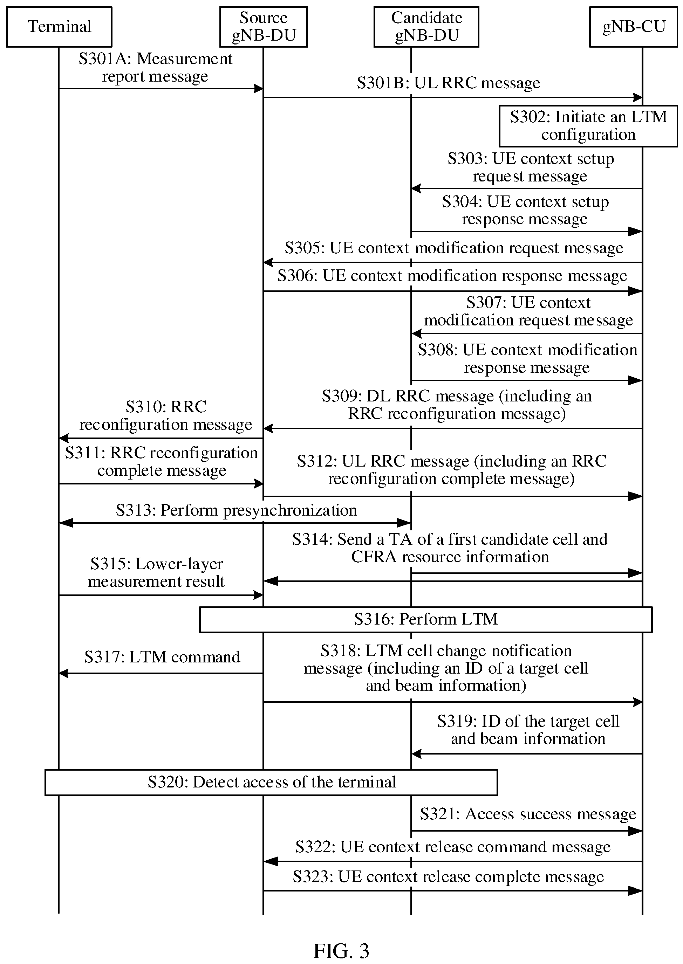

In the LTM, the terminal can move from one gNB-DU (which may also be referred to as a "source gNB-DU" in the following embodiments) to another gNB-DU (which may also be referred to as a "candidate gNB-DU" in the following embodiments) in a same gNB-CU, which may also be understood as switching between cells of a same gNB, that is, intra-gNB LTM (intra-gNB LTM). For example, FIG. 3 is a schematic flowchart corresponding to a communication method. As shown in FIG. 3, the method includes the following steps.

S301A: A terminal sends a measurement report message to a source gNB-DU.

The measurement report message may include an L3 measurement result, and may specifically include a measurement result of a neighboring cell. The neighboring cell is a cell to which the terminal may switch after the terminal moves.

S301B: The source gNB-DU sends an uplink (uplink, UL) RRC message to a gNB-CU. The UL RRC message includes the measurement report message.

S302: The gNB-CU determines, based on the measurement result of the neighboring cell, to initiate an LTM configuration.

S303: The gNB-CU sends a UE context setup request message to a candidate gNB-DU.

The UE context setup request message may include an ID of a first candidate cell. It may be understood that the gNB-CU further indicates an identifier (identifier, ID) of the source gNB-DU, to request the candidate gNB-DU to provide a physical random access channel (physical random access channel, PRACH) resource for the source gNB-DU.

S304: If accepting an LTM configuration request, the candidate gNB-DU sends a UE context setup response message to the gNB-CU.

The UE context setup response message includes at least one of the following information: a lower-layer RRC configuration, a transmission configuration indicator (transmission configuration indicator, TCI) state configuration, a random access channel (random access channel, RACH) resource configuration, and a reference signal (reference signal, RS) configuration corresponding to the first candidate cell.

S305: The gNB-CU sends a UE context modification request message to the source gNB-DU.

The UE context modification request message includes: the RS configuration of the first candidate cell, the TCI state configuration of the first candidate cell, and the RACH resource configuration of the first candidate cell.

S306: The source gNB-DU sends a UE context modification response message to the gNB-CU.

The UE context modification response message may include: a channel state information (channel state information, CSI) resource configuration of a source cell, which is for sending a lower-layer measurement result of the first candidate cell in the source cell.

S307: The gNB-CU sends a UE context modification request message to one or more candidate gNB-DUs.

The UE context modification request message may include a cell ID of the source cell and an RS configuration of the source cell. It should be noted that a candidate cell includes the source cell.

S308: The candidate gNB-DU sends a UE context modification response message to the gNB-CU.

The UE context modification response message may include: a generated CSI resource configuration, which is for sending CSI of a candidate cell in the first candidate cell.

S309: The gNB-CU sends a downlink (downlink, DL) RRC message to the source gNB-DU.

The DL RRC message may include an RRC reconfiguration message including the LTM configuration (for example, the lower-layer RRC configuration corresponding to the first candidate cell).

S310: The source gNB-DU sends the received RRC reconfiguration message to the terminal.

S311: The terminal sends an RRC reconfiguration complete message to the source gNB-DU.

S312: The source gNB-DU sends the RRC reconfiguration complete message to the gNB-CU by using the UL RRC message.

S313: The terminal performs presynchronization on the first candidate cell with the candidate gNB-DU based on a random access resource configuration of the first candidate cell. The presynchronization includes uplink presynchronization or downlink presynchronization.

S314: The candidate gNB-DU sends a timing advance (timing advance, TA) of the first candidate cell and associated contention free random access (contention free random access, CFRA) resource information to the source gNB-DU via the gNB-CU.

S313 and S314 are optional steps, and may not be performed.

S315: The terminal sends a lower-layer measurement result to the source gNB-DU. The terminal measures an RS based on an RS configuration, and then sends a measurement result to the source gNB-DU based on a CSI resource configuration.

S316: The source gNB-DU determines to perform LTM on a candidate cell.

S317: The source gNB-DU sends an LTM command to the terminal.

The LTM command includes an identifier of a target cell, which indicates that the first candidate cell is used as a target cell for handover. The LTM command may further include beam information (for example, a TCI state identifier) of the target cell and timing advance information of the target cell. The beam information is used by the terminal device to receive downlink control information in a contention free random access manner.

S318: The source gNB-DU sends an LTM cell change notification message to the gNB-CU, to indicate that the LTM command has been initiated to the terminal.

The LTM cell change notification message may include the ID of the target cell and the beam information. It may be understood that the target cell is one of candidate cells in the foregoing steps.

S319: The gNB-CU sends the ID of the target cell and the beam information to a target gNB-DU.

It may be understood that the target gNB-DU is one of candidate gNB-DUs in the foregoing steps, that is, a gNB-DU corresponding to the target cell.

S320: The target gNB-DU detects access of the terminal.

For example, the terminal device accesses the target gNB-DU in a random access manner or a contention free random access manner. If the contention free random access manner is used, the target gNB-DU sends the downlink control information to the terminal device based on the beam information. In the contention free random access manner, the terminal device accesses the target cell based on the timing advance information in the LTM command through a physical uplink shared channel (physical uplink shared channel, PUSCH) instead of a physical random access channel (physical random access channel, PRACH).

S321: After detecting the access of the terminal device, the target gNB-DU sends an access success message to the gNB-CU.

S322: The gNB-CU sends a UE context release command message to the source gNB-DU.

The UE context release command message is for releasing a resource of a candidate cell of the source gNB-DU.

S323: The source gNB-DU returns a UE context release complete message to the gNB-CU.

### 3. Key (also referred to as "secret key") derivation

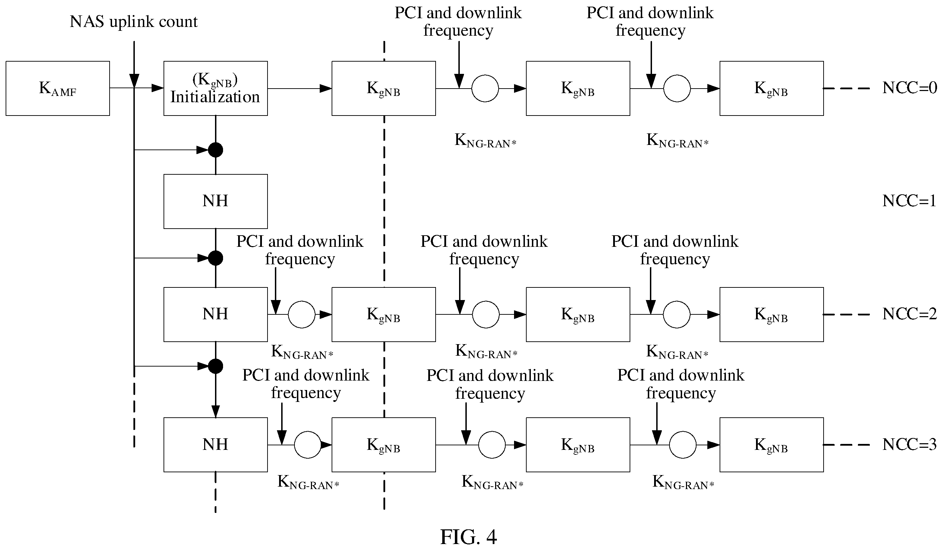

To ensure secure transmission between a terminal and a base station, data is protected by using a security key. In addition, the terminal communicates with different base stations by using different security keys. Currently, the security key is determined based on {next hop (next hop, NH) parameter, next hop chaining counter (next hop chaining counter, NCC)}. The NCC corresponds to the NH, and therefore the NCC identifies the NH. The NH is for determining the security key. For example, FIG. 4 is a diagram of key derivation.

In Xn mobility (also referred to as mobility in a 5G network), if a source gNB has an unused {NH, NCC} pair, vertical key derivation needs to be performed. If vertical key derivation is performed, the security key is determined based on the NH. Specifically, the source gNB needs to determine the K_{NG-RAN*} based on the unused NH, a physical cell identifier (physical cell identifier, PCI) of the target cell, and a downlink frequency of a target cell, to perform security protection on communication data by using the unused {NH, NCC} pair.

If the source gNB does not have an unused {NH, NCC} pair, horizontal key derivation needs to be performed. If horizontal key derivation is performed, the security key is determined based on K_{gNB} used by the source gNB. Specifically, the source gNB determines K_{NG-RAN*} based on an NH currently used by the source gNB, a PCI of a target cell, and a downlink frequency of the target cell, to perform security protection on communication data by using a used {NH, NCC} pair.

Then, the source gNB sends a determined {K_{NG-RAN*}, NCC} pair to a target gNB.

The target gNB uses K_{NG-RAN*} in the received {K_{NG-RAN*}, NCC} pair as the security key (K_{gNB}). In addition, the target gNB determines, based on K_{gNB}, a security key (Kᵤₚ or K_{rrc}) for data transmission, and performs security protection on data by using (Kᵤₚ or K_{rrc}). The target gNB includes the NCC in a handover command, and returns the handover command to the source gNB, and the source gNB sends the handover command to the terminal.

When an access stratum (access stratum, AS) security context needs to be established between the terminal and the gNB, the terminal determines K_{gNB} and the NH based on the NCC. For example, K_{gNB} and the NH are from an AMF. The NCC is associated with K_{gNB} and the NH, and K_{gNB} is associated with the NCC corresponding to the NH derived by K_{gNB}.

After the terminal accesses the target gNB, the terminal determines a security key (Kᵤₚ or K_{rrc}) for data transmission based on K_{gNB}, and performs security protection on data by using the security key (Kᵤₚ or K_{rrc}) for data transmission. For example, the terminal encrypts data by using the security key (Kᵤₚ or K_{rrc}), and sends the encrypted data to the target gNB; and the terminal receives data from the target gNB, and decrypts the data by using the security key (Kᵤₚ or K_{rrc}). Correspondingly, the target gNB encrypts data by using the security key (Kᵤₚ or K_{rrc}), and sends the encrypted data to the terminal; and the target gNB receives data from the terminal, and decrypts the data by using the security key (Kᵤₚ or K_{rrc}).

It can be learned from the descriptions of the foregoing related technical features that, after determining a target base station, a source base station derives a key for the target base station. However, an inter-gNB handover in LTM is not considered in an existing communication system, and there is a security risk in the inter-gNB LTM.

In view of this, embodiments of this application provide a communication method, to implement key processing in inter-gNB LTM, thereby implementing security protection in the inter-gNB LTM.

The following describes, with reference to Embodiment 1 to Embodiment 4, in detail the communication method provided in embodiments of this application. The communication method provided in embodiments of this application relates to communication between a plurality of network devices (for example, a first access network device, a second access network device, and a core network device) and a terminal. Unless otherwise specified, the "terminal" may refer to the terminal itself, or may refer to a component in the terminal, for example, a chip or a chip system, and the "network device" may refer to the network device itself, or may refer to a component in the network device, for example, a chip or a chip system. The following uses an example in which "the first access network device is a source base station, the second access network device is a candidate base station, and the core network device is an AMF" for description.

### Embodiment 1

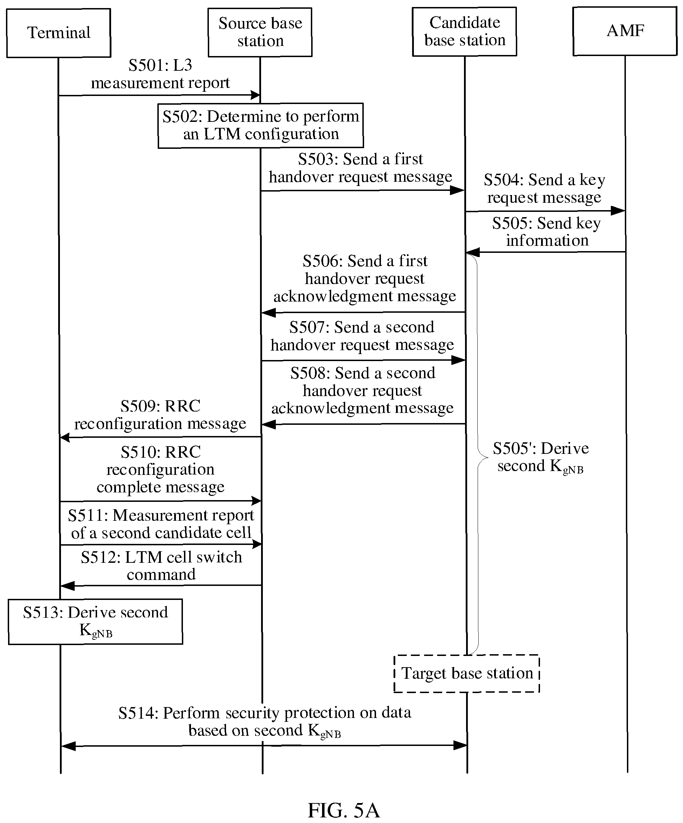

FIG. 5A is a schematic flowchart corresponding to a communication method according to Embodiment 1 of this application. As shown in FIG. 5A, the method includes the following steps.

S501: A terminal sends an L3 measurement report to a source base station.

The L3 measurement report includes a measurement result of one or more neighboring cells, and the one or more neighboring cells belong to at least one candidate base station.

It may be understood that, in this case, the terminal transmits data to the source base station, and security protection is performed on the data by using a first security key (for example, first K_{gNB}). Key information used by the source base station is {first NCC, first NH}. In the key derivation content described in FIG. 4, the terminal and the source base station determine first K_{gNB} by using the first NH corresponding to the first NCC, a first PCI, and a first downlink frequency as parameters for input, where the first PCI is a PCI of a source cell, and the first downlink frequency is a downlink frequency of the source cell. The source cell is a cell in which the terminal accesses the source base station.

In this embodiment of this application, one candidate base station is used as an example, and other candidate base stations are handled in a similar manner.

S502: The source base station determines to perform an LTM configuration.

For example, the source base station determines that a plurality of cells of a candidate base station are used as candidate cells, where different candidate cells correspond to different PCIs, and different candidate cells may correspond to a same downlink frequency or different downlink frequencies.

In this embodiment of this application, a first candidate cell and a second candidate cell are used as an example, and other candidate cells are handled similar to the second candidate cell. The first candidate cell and the second candidate cell are two different cells, and belong to the candidate base station. The following separately describes processing on the first candidate cell and the second candidate cell.

### First candidate cell

S503: The source base station sends a first handover request message to the candidate base station.

The first handover request message includes an identifier of the first candidate cell and an LTM configuration request. The identifier of the first candidate cell indicates that an LTM configuration of the first candidate cell is requested or a cell is requested as a candidate cell. The LTM configuration request is for requesting the LTM configuration. For specific content of the first handover request message, refer to the UE context setup request message in FIG. 3.

S504: The candidate base station sends a key request message to an AMF based on the received first handover request message.

Optionally, when the source base station does not indicate a cell for which key derivation is performed, the candidate base station determines the first candidate cell as the cell for which key derivation is performed. For example, the candidate base station randomly selects the first candidate cell from a plurality of candidate cells.

Additionally optionally, the candidate base station determines, based on an indication of the source base station, the first candidate cell as a cell for which key derivation is performed. For example, the source base station performs indication based on the first handover request message in S503. For example, the first handover request message further includes first indication information, where the first indication information indicates that the first candidate cell serves as the cell for which key derivation is performed. Based on this, the candidate base station determines, based on the first indication information in the first handover request message, the first candidate cell as the cell for which the candidate base station performs key derivation.

For example, the candidate base station sends the key request message to the AMF based on the determined first candidate cell. The key request message is for allocating corresponding key information to the first candidate cell.

S505: The AMF sends the key information to the candidate base station based on the key request message.

For example, the key information includes a second NCC and a second NH. It may be understood that the second NCC corresponds to the second NH. The second NCC identifies the second NH. The second NH is used by the candidate base station and the terminal to perform key derivation to obtain a second security key (for example, second K_{gNB}). Second K_{gNB} is for performing security protection on data between the terminal and the candidate base station.

S506: The candidate base station sends a first handover request acknowledgment message to the source base station based on the key information. For specific content of the first handover request message, refer to the UE context setup response message in FIG. 3. The candidate base station sends the first handover request acknowledgment message to the source base station after receiving the key information from the AMF.

Optionally, when the source base station does not indicate a cell for which key derivation is performed, the candidate base station determines the first candidate cell as the cell for which key derivation is performed, and the candidate base station indicates the cell to the source base station by using the first handover request acknowledgment message. In this case, the first handover request acknowledgment message includes second indication information or the second NCC, and a candidate cell configuration. The second indication information indicates that the first candidate cell is used as the cell for which the candidate base station performs key derivation.

Additionally optionally, when the candidate base station determines, based on the indication of the source base station, the first candidate cell as the cell for which key derivation is performed, the first handover request acknowledgment message includes the second NCC and a candidate cell configuration. It may be understood that, in this scenario, the first handover request acknowledgment message does not need to include second indication information.

### Second candidate cell

S507: The source base station sends a second handover request message to the candidate base station.

The second handover request message includes an identifier of the second candidate cell and an LTM configuration request. The identifier of the first candidate cell indicates that an LTM configuration of the second candidate cell is requested or a cell is requested as a candidate cell. The LTM configuration request is for requesting the LTM configuration. For specific content of the first handover request message, refer to the UE context setup request message in FIG. 3.

S508: The candidate base station sends a second handover request acknowledgment message to the source base station.

The second handover request acknowledgment message includes third indication information. The third indication information has a plurality of forms as follows:
(1-1) The third indication information indicates that the second candidate cell and the first candidate cell jointly use a same NCC, that is, the second NCC and the second NH. For example, the third indication information includes the identifier of the first candidate cell.
(1-2) The third indication information indicates a second NCC corresponding to the second candidate cell, where the second NCC corresponding to the second candidate cell is the same as the second NCC corresponding to the first candidate cell.

It may be understood that, in this case, the candidate base station does not need to send a key request to the AMF, and the AMF does not need to send key information to the candidate base station either.

The source base station may determine at least the following content based on the first handover request acknowledgment message and the second handover request acknowledgment message that are from the candidate base station:
(2-1) The first candidate cell and the second candidate cell of the candidate base station accept a handover request. Based on this, the source base station determines a first list, where the first list is a candidate cell for which the candidate base station accepts the handover request.
(2-2) The second candidate cell and the first candidate cell use the same NCC. It may also be understood as that the first list corresponds to a same NCC, that is, the first list corresponds to the second NCC.
(2-3) The source base station determines the first candidate cell as the cell for which key derivation is performed.

Based on the foregoing determined content, the source base station indicates the terminal to perform reconfiguration, which is implemented in the following S509 and S510.

S509: The source base station sends an RRC reconfiguration message to the terminal. The RRC reconfiguration message includes at least the following information:
(3-1) First list: The list includes the identifier of the first candidate cell and the identifier of the second candidate cell. It should be noted that the first list may include an identifier of only one candidate cell, that is, the identifier of the first candidate cell, or may include identifiers of a plurality of candidate cells, where the plurality of candidate cells include the first candidate cell.
(3-2) Second NCC: That the second NCC identifies the second NH may be understood as that the second NH is used as one of input parameters for key derivation for the first list, and the second NCC corresponds to the first list.
(3-3) Cell that corresponds to the first list and for which key derivation is performed, that is, the first candidate cell in the foregoing steps: It may be understood as that a PCI and a downlink frequency of the first candidate cell are used as input parameters for key derivation for the first list. All cells in the first list use a same security key. For a specific derivation manner, refer to the foregoing descriptions in FIG. 4.

For example, the RRC reconfiguration message includes different fields, and the different fields may separately indicate the foregoing information.

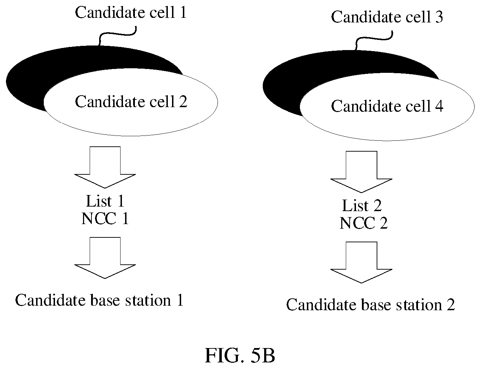

For example, FIG. 5B is a diagram of a list according to Embodiment 1 of this application. FIG. 5B shows a candidate base station 1 and a candidate base station 2. The candidate base station 1 corresponds to a list 1. The list 1 includes an identifier of a candidate cell 1 and an identifier of a candidate cell 2, indicating that the candidate cell 1 and the candidate cell 2 of the candidate base station accept a handover request of the source base station. The list 1 corresponds to an NCC 1, indicating that both the candidate cell 1 and the candidate cell 2 correspond to the NCC 1. A cell that corresponds to the list 1 and for which key derivation is performed is the candidate cell 1.

The candidate base station 2 corresponds to a list 2. The list 2 includes an identifier of a candidate cell 3 and an identifier of a candidate cell 4, indicating that the candidate cell 3 and the candidate cell 4 of the candidate base station accept a handover request of the source base station. The list 2 corresponds to an NCC 2, indicating that both the candidate cell 3 and the candidate cell 4 correspond to the NCC 2. A cell that corresponds to the list 2 and for which key derivation is performed is the candidate cell 3.

S510: After completing reconfiguration based on the RRC reconfiguration message, the terminal sends an RRC reconfiguration complete message to the source base station.

After the terminal completes the reconfiguration, the source base station indicates, based on a measurement report from the terminal, the terminal to perform cell switching. In the following embodiment, an example in which the terminal switches from the source cell to the second candidate cell is used. For a processing procedure of switching to the first candidate cell, refer to the processing procedure of switching to the second candidate cell.

S511: The terminal sends a measurement report of the second candidate cell to the source base station. The measurement report indicates signal quality of the second candidate cell.

The source base station determines, based on a measurement report of a candidate cell sent by the terminal, a candidate cell to which the terminal is to switch. It may be understood that when a candidate cell is used as a cell to which the terminal switches, the candidate cell is a target cell, and a base station corresponding to the target cell is a target base station.

S512: The terminal receives an LTM cell switch command sent by the source base station. The LTM cell switch command indicates to switch to the second candidate cell. That is, the second candidate cell is used as the target cell to which the terminal switches. For specific content of the LTM cell switch command, refer to the LTM command in FIG. 3.

S513: The terminal derives second K_{gNB}.

For example, the terminal derives second K_{gNB} based on the second NH corresponding to the second NCC, the PCI of the first candidate cell, and the downlink frequency of the first candidate cell. For a specific derivation process, refer to the key derivation content described in FIG. 4.

S514: Perform security protection on data between the terminal and the target base station based on second K_{gNB}. For example, in the second candidate cell (that is, the "target cell"), data is sent to the candidate base station (that is, the "target base station"), or data of the target base station is received. Security protection is performed on the data based on second K_{gNB}.

In addition, the candidate base station derives second K_{gNB} based on processing of the terminal described in S513 and S514. For a specific derivation process, refer to the key derivation content described in FIG. 4.

It should be noted that, both a security key corresponding to the first candidate cell and a security key corresponding to the second candidate cell are derived based on key information of the first candidate cell. Therefore, when the terminal subsequently switches from the second candidate cell to the first candidate cell, a security key used between the terminal and the candidate base station is not updated.

According to the content described in Embodiment 1, in inter-gNB LTM, a candidate base station maintains key information of the candidate base station, to avoid a security issue.

### Embodiment 2

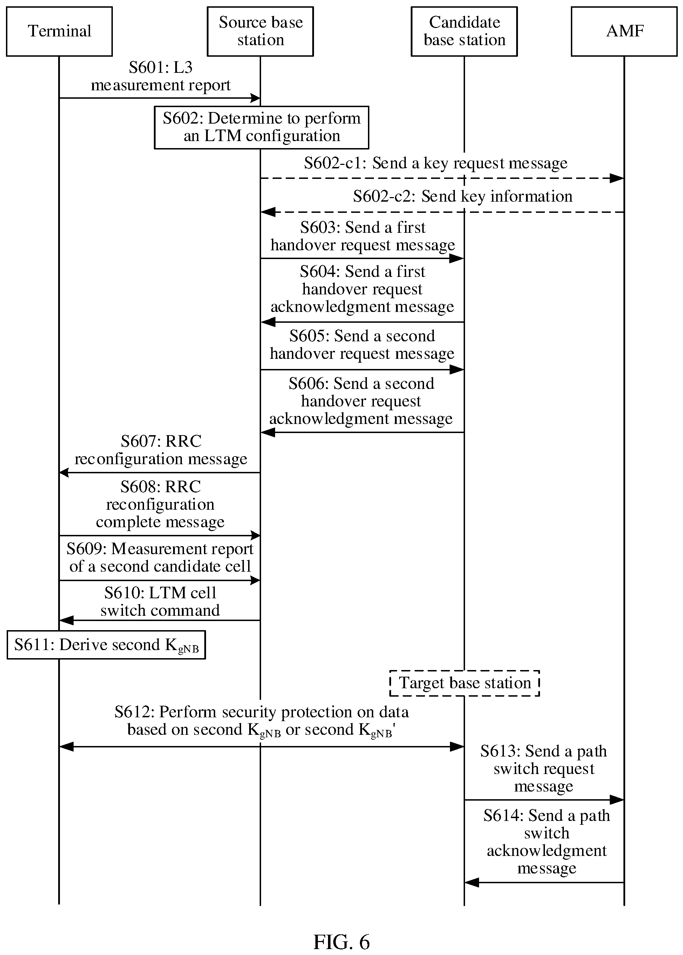

FIG. 6 is a schematic flowchart corresponding to a communication method according to Embodiment 2 of this application. As shown in FIG. 6, the method includes the following steps.

S601: A terminal sends an L3 measurement report to a source base station.

The L3 measurement report includes a measurement result of one or more neighboring cells, and the one or more neighboring cells belong to at least one candidate base station.

It may be understood that, in this case, the terminal transmits data to the source base station, and security protection is performed on the data by using a first security key (for example, first K_{gNB}). Key information used by the source base station is {first NCC, first NH}. Based on the key derivation content described in FIG. 4, the terminal and the source base station determine first K_{gNB} by using the first NH corresponding to the first NCC, a first PCI, and a first downlink frequency as parameters for input, where the first PCI is a PCI of a source cell, and the first downlink frequency is a downlink frequency of the source cell. The source cell is a cell in which the terminal accesses the source base station.

In this embodiment of this application, one candidate base station is used as an example, and other candidate base stations are handled in a similar manner.

S602: The source base station determines to perform an LTM configuration.

In this case, the source base station performs the following step a and step b.
a: The source base station determines that a plurality of cells of a candidate base station are used as candidate cells, where different candidate cells correspond to different PCIs, and different candidate cells may correspond to a same downlink frequency or different downlink frequencies.

In this embodiment of this application, a first candidate cell and a second candidate cell are used as an example, and other candidate cells are handled similar to the second candidate cell. The first candidate cell and the second candidate cell are two different cells, and belong to the candidate base station.

Based on that the first candidate cell and the second candidate cell belong to a same candidate base station, the first candidate cell and the second candidate cell correspond to same key information, that is, key information corresponding to the candidate base station, for example, a second NCC and a second NH. It may also be understood as that the second candidate cell uses a security key corresponding to the first candidate cell.

b: Determine, from the first candidate cell and the second candidate cell, the first candidate cell as a cell for which key derivation is performed; and use the key information corresponding to the candidate base station, a PCI of the first candidate cell, and a downlink frequency of the first candidate cell as input parameters for key derivation, to derive a key for the candidate base station. The key information corresponding to the candidate base station is determined in at least the following two manners:

Determining manner 1: The source base station uses key information (for example, the first NCC and the first NH) used by the source cell as the key information corresponding to the candidate base station.

For example, the source base station derives, based on the first NH corresponding to the first NCC, the PCI of the first candidate cell, and the downlink frequency of the first candidate cell, the security key (for example, second K_{gNB}) corresponding to the first candidate cell. The first NH is an NH used by the source cell.

Determining manner 2: The source base station obtains, from an AMF, the key information corresponding to the candidate base station. For example, the source base station obtains, from the AMF by using S602-c1 and S602-c2, the key information corresponding to the candidate base station.

S602-c1: The source base station sends a key request message to the AMF. The key request message is for requesting the key information corresponding to the candidate base station.

S602-c2: The AMF sends the key information to the source base station.

For example, the key information includes the second NCC and the second NH, where the second NCC identifies the second NH. For example, the source base station obtains, based on the second NH corresponding to the second NCC, the PCI of the first candidate cell, and the downlink frequency of the first candidate cell, the security key (for example, second K_{gNB}') corresponding to the first candidate cell.

For another example, the key information includes the second NCC, a first extended NCC (a first H-NCC), and the second NH, where the first H-NCC and the second NCC are for jointly identifying the second NH. For example, the source base station obtains, based on the second NCC, the second NH corresponding to the first H-NCC, the PCI of the first candidate cell, and the downlink frequency of the first candidate cell, a security key (for example, second K_{gNB}') corresponding to the first candidate cell.

It may be understood that, when the key information sent by the AMF includes an H-NCC, key information used in a subsequent procedure is the second NCC and the first H-NCC. It may be further understood that when the key information sent by the AMF does not include an H-NCC, key information used in a subsequent procedure is the second NCC.

The following separately describes processing performed by the source base station on the first candidate cell and the second candidate cell.

### First candidate cell

S603: The source base station sends a first handover request message to the candidate base station based on processing in S602.

The first handover request message includes: an identifier of the first candidate cell; an LTM configuration request; and key information corresponding to the first candidate cell. The identifier of the first candidate cell indicates to request an LTM configuration of the first candidate cell, the LTM configuration request is for requesting the LTM configuration, and the key information corresponding to the first candidate cell indicates an NCC and a security key. For specific content of the first handover request message, refer to the UE context setup request message in FIG. 3.

Based on S602, the key information corresponding to the first candidate cell has a plurality of forms as follows:
(4-1) including the first NCC and second K_{gNB};
(4-2) including the second NCC and second K_{gNB}'; and
(4-3) including the second NCC, the first H-NCC, and the second K_{gNB}'.

S604: The candidate base station sends a first handover request acknowledgment message to the source base station in response to the first handover request message.

The first handover request acknowledgment message includes a candidate cell configuration. For specific content of the first handover request message, refer to the UE context setup response message in FIG. 3.

In addition, the candidate base station includes an NCC in the first handover request message. For example, the first handover request acknowledgment message further includes the first NCC, the second NCC, or the second NCC and the first H-NCC. Alternatively, the candidate base station includes an NCC in the candidate cell configuration. For example, the candidate cell configuration includes the first NCC, the second NCC, or the second NCC and the first H-NCC.

### Second candidate cell

S605: The source base station sends a second handover request message to the candidate base station based on processing in S602.

The second handover request message includes an identifier of the second candidate cell and an LTM configuration request. The identifier of the second candidate cell indicates that an LTM configuration of the second candidate cell is requested, and the LTM configuration request is for requesting the LTM configuration. For specific content of the second handover request message, refer to the UE context setup request message in FIG. 3. Based on that the first candidate cell serves as a cell for which the source base station performs key derivation for the candidate base station, the second handover request message does not include key information.

S606: The candidate base station sends a second handover request acknowledgment message to the source base station.

In this case, the candidate base station determines, from the second handover request message, that the second candidate cell uses the security key (for example, second K_{gNB} or second K_{gNB}') of the first candidate cell. Based on this, the second handover request acknowledgment message includes fourth indication information. The fourth indication information indicates the second candidate cell to use the security key (for example, second K_{gNB} or second K_{gNB}') corresponding to the first candidate cell.

After receiving the first handover request acknowledgment message and the second handover request acknowledgment message from the candidate base station, the source base station indicates, based on the LTM configuration performed in S602, the terminal to perform reconfiguration.

S607: The source base station sends an RRC reconfiguration message to the terminal. The RRC reconfiguration message includes at least the following information:
(5-1) First list: The list includes the identifier of the first candidate cell and the identifier of the second candidate cell. The first list is determined by the source base station in S602.

It should be noted that the first list may include an identifier of only one candidate cell, that is, the identifier of the first candidate cell, or may include identifiers of a plurality of candidate cells, where the plurality of candidate cells include the first candidate cell.

(5-2) Second NCC (or second NCC and first H-NCC) or first NCC: The first NCC is an NCC corresponding to the source cell. It may be understood that if the source base station does not request key information from the AMF, the first NCC is carried; or if the source base station requests key information from the AMF, the second NCC (or the second NCC and the first H-NCC) is carried. The second NCC (or the second NCC and the first H-NCC) or the first NCC corresponds to the first list.

The first NCC identifies the first NH, and the second NCC (or the second NCC and the first H-NCC) is for (jointly) identifying the second NH. It may be understood as that the first NH or the second NH is used as one of input parameters for key derivation for the first list.

(5-3) Cell that corresponds to the first list and for which key derivation is performed, that is, the first candidate cell in the foregoing steps: It may be understood as that a PCI and a downlink frequency of the first candidate cell are used as input parameters for key derivation for the first list. All cells in the first list use a same security key. For a specific derivation manner, refer to the foregoing descriptions in FIG. 4.

For example, the RRC reconfiguration message includes different fields, and the different fields may separately indicate the foregoing information. The first list indicates that both the first candidate cell and the second candidate cell use the second NCC (or the second NCC and the first H-NCC) or the first NCC, and both security keys corresponding to the first candidate cell and the second candidate cell correspond to the first candidate cell.

S608: After completing reconfiguration based on the RRC reconfiguration message, the terminal sends an RRC reconfiguration complete message to the source base station.

After the terminal completes the reconfiguration, the source base station indicates, based on a measurement report from the terminal, the terminal to perform cell switching. In the following embodiment, an example in which the terminal switches from the source cell to the second candidate cell is used. For a processing procedure of switching to the first candidate cell or another candidate cell, refer to the processing procedure of switching to the second candidate cell.

S609: The terminal sends a measurement report of the second candidate cell to the source base station. The measurement report indicates signal quality of the second candidate cell.

The source base station determines, based on a measurement report of a candidate cell sent by the terminal, a candidate cell to which the terminal is to switch. It may be understood that when a candidate cell is used as a cell to which the terminal switches, the candidate cell is a target cell, and a base station corresponding to the target cell is a target base station.

S610: The terminal receives an LTM cell switch command sent by the source base station. The LTM cell switch command indicates to switch to the second candidate cell. That is, the second candidate cell is used as the target cell to which the terminal switches. For specific content of the LTM cell switch command, refer to the LTM command in FIG. 3.

S611: The terminal derives second K_{gNB}.

For example, the terminal derives second K_{gNB}' based on the second NH corresponding to the second NCC, the PCI of the first candidate cell, and the downlink frequency of the first candidate cell. Alternatively, the terminal derives second K_{gNB}' based on the second NCC, the first NH corresponding to the first H-NCC, the PCI of the first candidate cell, and the downlink frequency of the first candidate cell. For a specific derivation process, refer to the key derivation content described in FIG. 4.

For another example, the terminal derives second K_{gNB} based on the first NH corresponding to the first NCC, the PCI of the first candidate cell, and the downlink frequency of the first candidate cell. For a specific derivation process, refer to the key derivation content described in FIG. 4.

S612: Perform security protection on data between the terminal and the target base station based on second K_{gNB} or second K_{gNB}'. For example, in the second candidate cell (that is, the "target cell"), data is sent to the candidate base station (that is, the "target base station"), or data of the target base station is received. Security protection is performed on the data based on second K_{gNB} or second K_{gNB}'.

S613: After the target base station determines that cell switching is completed, the target base station sends a path switch request message (for example, a path switch request) to the AMF.

S614: The AMF sends a path switch acknowledgment message (for example, path switch acknowledgment) to the target base station in response to the path switch request message. The path switch acknowledgment message includes key information.

For example, the key information included in the path switch acknowledgment message includes a third NCC and a third NH.

For another example, the key information included in the path switch acknowledgment message includes a third NCC, a second H-NCC, and a third NH. The second H-NCC is the same as or different from the first H-NCC, and the third NCC is different from the second NCC.

It may be understood that the key information included in the path switch acknowledgment message is for performing security protection on data after the terminal switches from the target base station to a cell of another base station, and is also for performing security protection on data after the terminal switches back to the second candidate cell.

It should be noted that, both a security key corresponding to the first candidate cell and a security key corresponding to the second candidate cell are derived based on key information of the first candidate cell. Therefore, when the terminal subsequently switches from the second candidate cell to the first candidate cell, a security key used between the terminal and the candidate base station is not updated.

According to the content described in Embodiment 2, in the inter-gNB LTM, the source base station maintains key information, and derives a key for the candidate base station, thereby avoiding a security issue.

### Embodiment 3

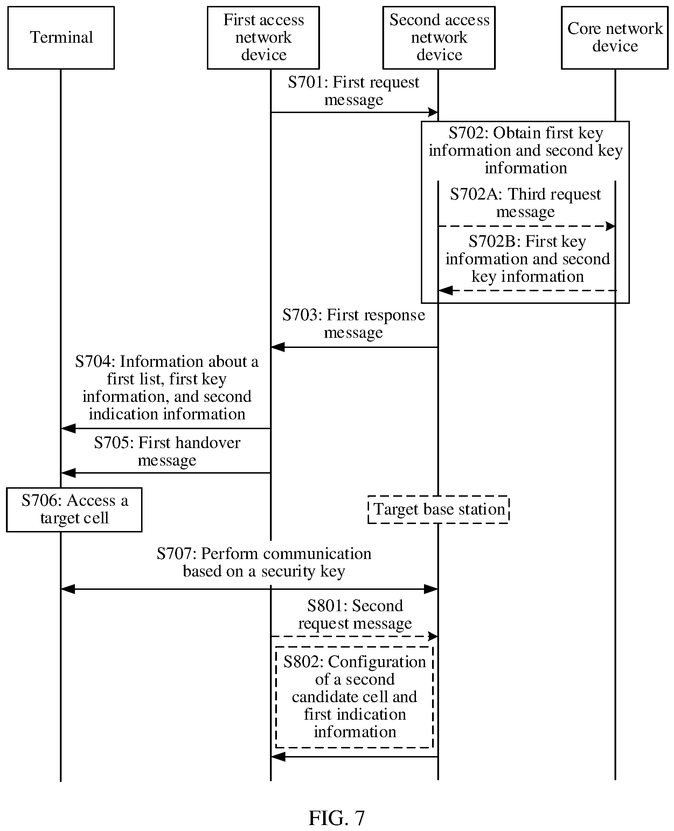

FIG. 7 is a schematic flowchart corresponding to a communication method according to Embodiment 3 of this application. As shown in FIG. 7, the method includes the following steps.

S701: A first access network device (for example, a source base station) sends a first request message to a second access network device (for example, a candidate base station). Correspondingly, the second access network device receives the first request message from the first access network device.

The first request message is for requesting a configuration of a first candidate cell. For specific content of the first request message, refer to the UE context setup request message in FIG. 3.

For example, the first request message includes: an identifier of the first candidate cell and LTM configuration request information, where the identifier of the first candidate cell indicates that an LTM configuration of the first candidate cell is requested or a cell is requested as a candidate cell. The LTM configuration request information is for requesting the LTM configuration.

For another example, the first request information is further for requesting the second access network device to obtain a security key corresponding to the first candidate cell, and includes key request information.

It should be noted that a form of the first request information and specific information included in the first request information are not limited in this embodiment of this application.

S702: The second access network device obtains first key information (for example, a second NCC) and second key information (for example, a second NH) from a core network device (for example, an AMF) based on the first request message.

The second NCC identifies the second NH, and the second key information NH is used for security protection of data between a terminal and the second access network device. For example, the candidate base station obtains second K_{gNB} based on the second NH, a PCI of the first candidate cell, and a downlink frequency of the first candidate cell; and performs security protection on the data between the candidate base station and the terminal based on second K_{gNB}. For security protection based on K_{gNB}, refer to the content described in FIG. 4.

In an optional embodiment, that the second access network device obtains the first key information and the second key information includes the following steps S702A and S702B.

S702A: The second access network device sends a third request message to the core network device based on the first request message. Correspondingly, the core network device receives the third request message from the second access network device.

The third request message is for requesting key information, and includes the identifier of the first candidate cell and/or the key request information, where the key information corresponds to the first candidate cell.

S702B: The core network device sends the first key information and the second key information to the second access network device in response to the third request message. Correspondingly, the second access network device receives the first key information and the second key information from the core network device.

S703: The second access network device sends a first response message to the first access network device. Correspondingly, the first access network device receives the first response message from the first access network device.

For example, the first response message includes the configuration of the first candidate cell and the first key information (for example, the second NCC). Refer to the foregoing descriptions of FIG. 3. The configuration of the first candidate cell includes at least one of the following information: a lower-layer RRC configuration, a TCI state configuration, a RACH resource configuration, and an RS configuration that correspond to the first candidate cell. For specific content of the first response message, refer to the UE context setup response message in FIG. 3. After receiving the first key information and the second key information, the second access network device sends the first response message to the first access network device.

For another example, the first response message includes the configuration of the first candidate cell, and the configuration of the first candidate cell further includes the first key information. In this way, when the terminal receives the configuration of the first candidate cell, the terminal can obtain the first key information from the configuration of the first candidate cell, so that the terminal can obtain, based on the first key information (for example, the second NCC), the security key corresponding to the first candidate cell. For example, the terminal obtains second K_{gNB} based on the second NH corresponding to the second NCC, the PCI of the first candidate cell, and the downlink frequency of the first candidate cell, and performs security protection on the data between the terminal and the candidate base station based on the second K_{gNB}.

S704: The first access network device sends information about a first list, the first key information, and second indication information to the terminal based on the first response message. Correspondingly, the terminal receives the information about the first list, the first key information, and the second indication information from the first access network device.

(6-1) The first list indicates at least one piece of cell information, and includes the identifier of the first candidate cell. It should be noted that the first list may include an identifier of only one candidate cell, that is, the identifier of the first candidate cell, or may include identifiers of a plurality of candidate cells, where the plurality of candidate cells include the first candidate cell. In a possible embodiment, the first list further includes an identifier of a second candidate cell described in S801 subsequently.

(6-2) First key information: The first key information (for example, the second NCC) identifies the second key information (for example, the second NH). It may be understood as that the second NH is used as one of input parameters for key derivation for the first list, and the first key information corresponds to the first list.

(6-3) The second indication information indicates that the input parameters for key derivation correspond to the first candidate cell. It may be understood as that the PCI and the downlink frequency of the first candidate cell are used as the input parameters for key derivation for the first list, and all cells in the first list use a same security key. For a specific derivation manner, refer to the descriptions in FIG. 4.

For example, the second indication information includes the identifier of the first candidate cell, and the identifier of the first candidate cell indicates that the input parameters for key derivation correspond to the first candidate cell.

For another example, the second indication information indicates that the first candidate cell is used as a cell for key derivation for the first list, to indicate that the PCI and the downlink frequency of the first candidate cell are used as the input parameters for key derivation for the first list.

It should be noted that a form of the second indication information and specific information included in the second indication information are not limited in this embodiment of this application.

S705: The first access network device determines to perform LTM on a candidate cell, and sends a first handover message to the terminal. Correspondingly, the terminal receives the first handover message from the first access network device.

The first handover message indicates the terminal device to switch to a target cell. The first handover message is transmitted by using a MAC control element (control element, CE). The target cell is the first candidate cell or the second candidate cell described in subsequent S801. It may be understood that a candidate cell to which the terminal device switches is referred to as the target cell in this case, and a base station corresponding to the target cell is referred to as a target base station in this case. For specific content of the first handover message, refer to the LTM command in FIG. 3.

S706: The terminal accesses the target cell.

For specific content of accessing the target cell, refer to the descriptions in FIG. 3.

S707: The terminal communicates with the second access network device in the target cell based on the security key.

The terminal device derives, based on the first key information and the second indication information that are received in S704, a security key corresponding to the target cell. For a specific derivation manner, refer to the foregoing descriptions. It may be understood that when the terminal accesses the first candidate cell or the second candidate cell, a same security key is used.

In addition, the second access network device also derives, based on the first key information and/or the second key information obtained in S702, the security key corresponding to the target cell. For a specific derivation manner, refer to the foregoing descriptions. It may be understood that when the terminal accesses the first candidate cell or the second candidate cell, the second access network device uses a same security key.

According to the content described in Embodiment 3, the first access network device requests key information of a candidate cell and a configuration of the candidate cell from the second access network device, and the second access network device determines the key information. Then, after obtaining the key information, the first access network device sends the key information to the terminal. Therefore, after LTM switch to the second access network device, data security in inter-gNB LTM is ensured.

In an optional embodiment, before S704, the first access network device further requests a configuration of the second candidate cell from the second access network device, and the following steps S801 and S802 are included.

S801: The first access network device (for example, the source base station) sends a second request message to the second access network device (for example, the candidate base station). Correspondingly, the second access network device receives the second request message from the first access network device.

The second request message is for requesting the configuration of the second candidate cell. For specific content of the second request message, refer to the UE context setup request message in FIG. 3.

For example, the second request message includes: the identifier of the second candidate cell and LTM configuration request information, where the identifier of the second candidate cell indicates that an LTM configuration of the second candidate cell is requested, and the LTM configuration request information is for requesting the LTM configuration.

For another example, the second request information is further for requesting the second access network device to obtain a security key corresponding to the second candidate cell, and includes the key request information.

It should be noted that a form of the second request information and specific information included in the second request information are not limited in this embodiment of this application.

S802: The second access network device sends the configuration of the second candidate cell and first indication information to the first access network device. Correspondingly, the first access network device receives the configuration of the second candidate cell and the first indication information that are from the second access network device.

It may be understood that the second access network device determines that the second candidate cell and the first candidate cell use same key information.

For example, the first indication information indicates key information corresponding to the second candidate cell, and the key information corresponding to the second candidate cell is the same as key information corresponding to the first candidate cell. The first indication information may be a direct indication, for example, a newly added parameter, or may be an implicit indication, for example, a key information parameter is not carried.

For another example, the first indication information indicates that key information corresponding to the second candidate cell is the same as key information corresponding to the first candidate cell.

For still another example, the configuration of the second candidate cell further includes the first indication information. In this way, when the first access network device sends the configuration of the second candidate cell to the terminal, the terminal can obtain the first indication information from the configuration of the second candidate cell, so that the terminal can determine, based on the first indication information, that the second candidate cell shares the security key corresponding to the first candidate cell.

According to the content described in S801 and S802, the first candidate cell and the second candidate cell use a same key, so that in a scenario in which the second network device moves, a key does not need to be updated, thereby reducing an intra-gNB handover delay.

Further, based on a fact that the first candidate cell and the second candidate cell use a same key, the second access network device determines, from the first candidate cell and the second candidate cell, a cell for which key derivation is performed, to obtain a key used by the second access network device. The cell for which key derivation is performed may be determined by the second access network device, or may be indicated by the first access network device to the second access network device. Specific implementations are as follows:

Implementation 1: The first access network device determines a cell for which key derivation is performed, indicates the cell to the second access network device by using the first request message in S701, and further indicates the cell to the terminal in S704.

In this case, the first request message includes information about a third candidate cell, where the information about the third candidate cell is for obtaining or determining the security key corresponding to the first candidate cell, and the third candidate cell is the same as or different from the first candidate cell.

For example, the first candidate cell is the same as the third candidate cell. The first access network device requests the configuration of the first candidate cell, and indicates to further determine the key of the first candidate cell based on the first candidate cell.

For another example, the first candidate cell is different from the third candidate cell. The first access network device requests the configuration of the first candidate cell, and indicates to determine the key of the first candidate cell based on the third candidate cell.

Implementation 2: The second access network device determines, in response to the first request message, a cell for which key derivation is to be performed, and in this case, indicates the cell to the first access network device by using the first response message in S703. Then, the first access network device indicates, in S704, the cell for which the terminal performs key derivation.

In this case, the first response message further includes the first key information and information about a third candidate cell corresponding to the first key information, the information about the third candidate cell is for obtaining or determining the security key corresponding to the first candidate cell, and the third candidate cell is the same as or different from the first candidate cell.

For example, the first candidate cell is the same as the third candidate cell. The second access network device sends the configuration of the first candidate cell to the first access network device, and indicates to further determine the key of the first candidate cell based on the first candidate cell.

For another example, the first candidate cell is different from the third candidate cell. The second access network device sends the configuration of the first candidate cell to the first access network device, and indicates to determine the key of the first candidate cell based on the third candidate cell.

### Embodiment 4

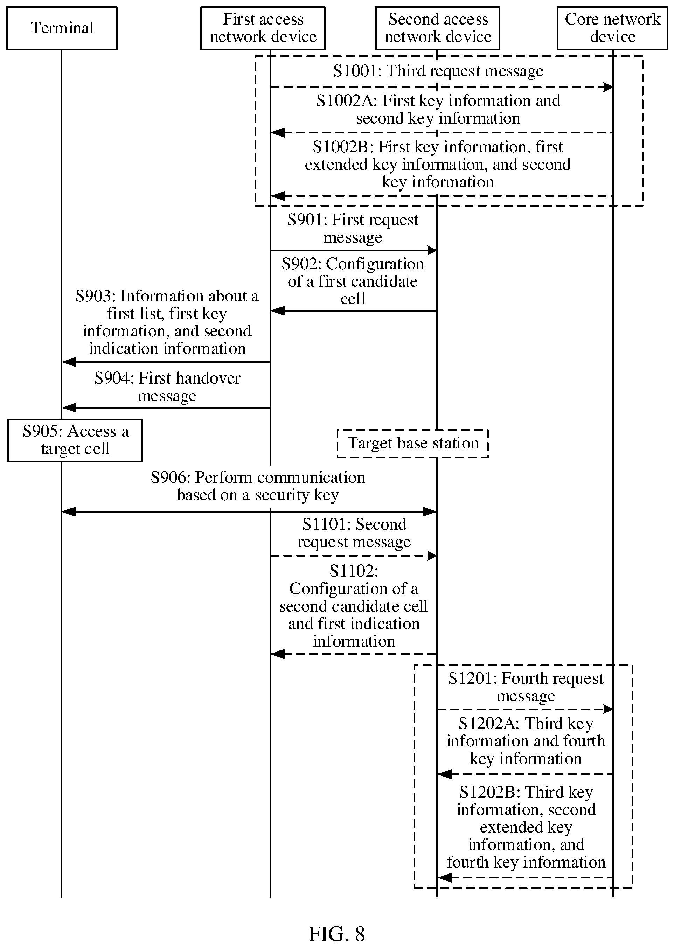

FIG. 8 is a schematic flowchart corresponding to a communication method according to Embodiment 4 of this application. As shown in FIG. 8, the method includes the following steps.

S901: A first access network device (for example, a source base station) determines to perform an LTM configuration, and sends a first request message to a second access network device (for example, a candidate base station). Correspondingly, the second access network device receives the first request message from the first access network device.

The first request message is for requesting a configuration of a first candidate cell, and the first request message further indicates key information corresponding to the first candidate cell. For example, the first request information includes a security key corresponding to the first candidate cell and cell information corresponding to the security key, and the cell information corresponding to the security key is used as an input parameter for deriving the security key, and for example, is the first candidate cell. For specific content of the first request message, refer to the UE context setup request message in FIG. 3. The first request information further includes key information (for example, an NCC) for deriving the security key.

For example, the first request message includes: an identifier of the first candidate cell and LTM configuration request information, where the identifier of the first candidate cell indicates that an LTM configuration of the first candidate cell is requested or a cell is requested as a candidate cell. The LTM configuration request information is for requesting the LTM configuration.

In S901, the key information (for example, the NCC) for deriving the security key is obtained in a plurality of manners as follows:

In an obtaining manner A, the first access network device uses used key information (for example, a first NCC) as the key information for deriving the security key. The first NCC is an NCC corresponding to a source cell, and is key information of a terminal device, and the first NCC identifies a first NH.

In an obtaining manner B, the first access network device obtains the key information from a core network device. For example, FIG. 8 further includes the following steps S1001 and S1002A (or S1002B).

S1001: The first access network device sends a third request message to the core network device (for example, an AMF). Correspondingly, the core network device receives the third request message from the first access network device.

The third request message is for requesting key information, and includes the identifier of the first candidate cell and/or key request information, where the key information corresponds to the first candidate cell.

S1002A: The core network device sends first key information (for example, a second NCC) and second key information (for example, a second NH) to the first access network device.

Correspondingly, the first access network device receives the first key information and the second key information from the core network device.

Alternatively, in S1002B, the core network device sends first key information (for example, a second NCC), first extended key information (for example, a first H-NCC), and second key information (for example, a second NH) to the first access network device.

Correspondingly, the first access network device receives the first key information, the first extended key information, and the second key information from the core network device. The first key information and the first extended key information are for jointly identifying the second key information. When a quantity of candidate base stations is greater than a quantity of NCCs, extended key information needs to be additionally introduced, and the second key information is identified by using the first key information and the first extended key information, to avoid key misalignment.

S902: The second access network device sends the configuration of the first candidate cell to the first access network device. Correspondingly, the first access network device receives the configuration of the first candidate cell from the second access network device.

Refer to the foregoing descriptions of FIG. 3. The configuration of the first candidate cell includes at least one of the following information: a lower-layer RRC configuration, a TCI state configuration, a RACH resource configuration, and an RS configuration that correspond to the first candidate cell. The configuration of the first candidate cell further includes the key information corresponding to the first candidate cell. In this way, when the terminal receives the configuration of the first candidate cell, the terminal can obtain the key information from the configuration of the first candidate cell, so that the terminal can obtain, based on the key information (for example, the first NCC, the second NCC, or the second NCC and the first H-NCC), the security key corresponding to the first candidate cell. For example, the terminal obtains second K_{gNB} based on the first NH corresponding to the first NCC (or a second NH corresponding to the second NCC, or the second NH corresponding to both the second NCC and the first H-NCC), a PCI of the first candidate cell, and a downlink frequency of the first candidate cell, and performs security protection on data between the terminal and the candidate base station based on second K_{gNB}.

S903: The first access network device sends information about a first list, the first key information, and the second indication information to the terminal based on the first response message. Correspondingly, the terminal receives the information about the first list, the first key information, and the second indication information from the first access network device.

(7-1) The first list indicates at least one piece of cell information, and includes the identifier of the first candidate cell. It should be noted that the first list may include an identifier of only one candidate cell, that is, the identifier of the first candidate cell, or may include identifiers of a plurality of candidate cells, where the plurality of candidate cells include the first candidate cell. In a possible embodiment, the first list further includes an identifier of a second candidate cell described in S1001 subsequently.

(7-2) Key information corresponding to the first candidate cell: The key information (for example, the first NCC, the second NCC, or the second NCC and the first H-NCC) identifies the second key information (for example, the first NH or the second NH). It may be understood as that the first NH or the second NH is used as one of input parameters for key derivation for the first list, and the key information corresponds to the first list. The first NCC is an NCC used by the first access network device. The second NCC is an NCC obtained by the first access network device from the core network device.

(7-3) The second indication information indicates that the input parameters for key derivation correspond to the first candidate cell. It may be understood as that the PCI and the downlink frequency of the first candidate cell are used as the input parameters for key derivation for the first list, and all cells in the first list use a same security key. For a specific derivation manner, refer to the foregoing descriptions.

For example, the second indication information includes the identifier of the first candidate cell, and the identifier of the first candidate cell indicates that the input parameters for key derivation correspond to the first candidate cell.

For another example, the second indication information indicates that the first candidate cell is used as a cell for key derivation for the first list, to indicate that the PCI and the downlink frequency of the first candidate cell are used as the input parameters for key derivation for the first list.

It should be noted that a form of the second indication information and specific information included in the second indication information are not limited in this embodiment of this application.

S904: The first access network device determines to perform LTM on a candidate cell, and sends a first handover message to the terminal. Correspondingly, the terminal receives the first handover message from the first access network device.

The first handover message indicates the terminal device to switch to a target cell. The first handover message is transmitted by using a MAC control element (control element, CE). The target cell is the first candidate cell or the second candidate cell described in subsequent S1001. It may be understood that a candidate cell to which the terminal device switches is referred to as the target cell in this case, and a base station corresponding to the target cell is referred to as a target base station in this case. For specific content of the first handover message, refer to the LTM command in FIG. 3.

S905: The terminal accesses the target cell.

For specific content of accessing the target cell, refer to the descriptions in FIG. 3.

S906: The terminal communicates with the second access network device in the target cell based on the security key.

The terminal derives, based on the first key information and the second indication information that are received in S903, a security key corresponding to the target cell. For a specific derivation manner, refer to the foregoing descriptions. It may be understood that when the terminal accesses the first candidate cell or the second candidate cell, a same security key is used.

In addition, a security key used by the second access network device is indicated in the first request message in S901. It may be understood that when the terminal accesses the first candidate cell or the second candidate cell, the second access network device uses a same security key.

According to the content described in Embodiment 4, the first access network device derives a security key of a candidate cell for the second access network device, and then provides the key information and the security key to the second access network device when requesting the configuration of the first candidate cell from the second access network device by using the first request message. Therefore, after LTM switch to the second network device, data security in the inter-gNB LTM is ensured.

In an optional embodiment, before S903, the first access network device further requests a configuration of the second candidate cell from the second access network device, and the following steps S1101 and S1102 are included.

S1101: The first access network device (for example, the source base station) sends a second request message to the second access network device (for example, the candidate base station). Correspondingly, the second access network device receives the second request message from the first access network device.

The second request message is for requesting the configuration of the second candidate cell or request a cell as a candidate cell. For specific content of the second request message, refer to the UE context setup request message in FIG. 3.

For example, the second request message includes: an identifier of the second candidate cell and LTM configuration request information, where the identifier of the second candidate cell indicates that an LTM configuration of the second candidate cell is requested, and the LTM configuration request information is for requesting the LTM configuration.

It should be noted that a form of the second request information and specific information included in the second request information are not limited in this embodiment of this application.

S1102: The second access network device sends the configuration of the second candidate cell and first indication information to the first access network device. Correspondingly, the first access network device receives the configuration of the second candidate cell and the first indication information that are from the second access network device.

It may be understood that the second access network device determines that the second candidate cell and the first candidate cell use a same security key.

For example, the first indication information indicates key information corresponding to the second candidate cell, and the key information corresponding to the second candidate cell is the same as key information corresponding to the first candidate cell. The first indication information may be a direct indication, for example, a newly added parameter, or may be an implicit indication, for example, a key information parameter is not carried.

For another example, the first indication information indicates that key information corresponding to the second candidate cell is the same as key information corresponding to the first candidate cell.

For still another example, the configuration of the second candidate cell further includes the first indication information. In this way, when the first access network device sends the configuration of the second candidate cell to the terminal, the terminal can obtain the first indication information from the configuration of the second candidate cell, so that the terminal can determine, based on the first indication information, that the second candidate cell shares the security key corresponding to the first candidate cell.

According to the content described in S1101 and S1102, the first candidate cell and the second candidate cell use a same key, so that in a scenario in which the second network device moves, a key does not need to be updated, thereby reducing an intra-gNB handover delay.

Based on S905, after the terminal switches to a candidate cell corresponding to the second access network device, the second access network device obtains or determines key information for a candidate access network device (for example, a third access network device) of the second access network device, to derive a security key of a candidate cell corresponding to the third access network device. For example, FIG. 8 further includes the following steps S1201 and S1202A (or S1202B).

S1201: The second access network device sends a fourth request message to the core network device. Correspondingly, the core network device receives the fourth request message from the second access network device.

S1202A: The core network device sends third key information (for example, a third NCC) and fourth key information (for example, a third NH) to the second access network device. Correspondingly, the second access network device receives the third key information and the fourth key information from the core network device.

The third key information identifies the fourth key information, and the fourth key information is used for security protection of data between the terminal and the third access network device.

Alternatively, in S1202B, the core network device sends third key information (for example, a third NCC), second extended key information (for example, a second H-NCC), and fourth key information (for example, a third NH) to the second access network device. Correspondingly, the second access network device receives the third key information, the second extended key information (for example, the second H-NCC), and the fourth key information from the core network device.

The third key information and the second extended key information are for jointly identifying the fourth key information, and the fourth key information is used for security protection of data between the terminal and the third access network device.

For example, the second H-NCC is the same as or different from the first H-NCC in S1002B.

For another example, the third NCC is different from the second NCC and the first NCC in S901.

The foregoing mainly describes the solutions provided in embodiments of this application from a perspective of interaction between the terminal and the network device. It may be understood that, to implement the foregoing functions, the terminal or the network device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

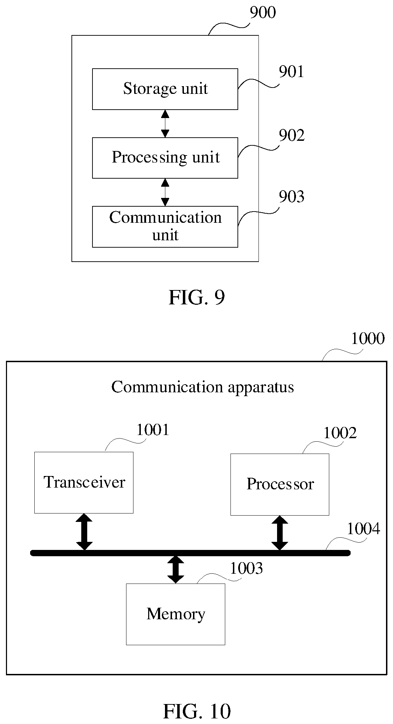

When the integrated unit is used, FIG. 9 is a possible example block diagram of an apparatus according to an embodiment of this application. As shown in FIG. 9, an apparatus 900 may include a processing unit 902 and a communication unit 903. The processing unit 902 is configured to control and manage an action of the apparatus 900. The communication unit 903 is configured to support communication between the apparatus 900 and another device. Optionally, the communication unit 903 is also referred to as a transceiver unit, and may include a receiving unit and/or a sending unit, respectively configured to perform a receiving operation and a sending operation. The apparatus 900 may further include a storage unit 901 that is configured to store program code and/or data of the apparatus 900.
(1) The apparatus 900 may be the second access network device in the foregoing embodiments. The processing unit 902 may support the apparatus 900 in performing an action of the second access network device in Embodiment 1 or Embodiment 3. Alternatively, the processing unit 902 mainly performs an internal action of the second access network device in the method examples, and the communication unit 903 may support communication between the apparatus 900 and another device.

For example, in an embodiment, the communication unit 903 is configured to receive a first request message from a first access network device, where the first request message is for requesting a configuration of a first candidate cell. The processing unit 902 is configured to obtain first key information and second key information from a core network device based on the first request message, where the first key information identifies the second key information, the second key information is used for security protection of data between a terminal device and the second access network device, and the first key information and the second key information correspond to the first candidate cell. The communication unit 903 is configured to send a first response message to the first access network device, where the first response message includes the configuration of the first candidate cell and the first key information.

In a possible design, the communication unit 903 is further configured to: receive a second request message from the first access network device, where the second request message is for requesting a configuration of a second candidate cell; and send, to the first access network device, the configuration of the second candidate cell and first indication information, where the first indication information indicates key information corresponding to the second candidate cell, and the key information corresponding to the second candidate cell is the same as key information corresponding to the first candidate cell.

In a possible design, the first request message includes key request information, and the key request information is for requesting the second access network device to obtain a security key corresponding to the first candidate cell.

In a possible design, the key request information includes information about a third candidate cell, the information about the third candidate cell is for obtaining the security key corresponding to the first candidate cell, and the third candidate cell is the same as or different from the first candidate cell.

In a possible design, the first response message further includes information about a third candidate cell corresponding to the first key information, the information about the third candidate cell is for obtaining the security key corresponding to the first candidate cell, and the third candidate cell is the same as or different from the first candidate cell.

In a possible design, the processing unit 902 is further configured to derive, based on the second key information, a PCI of the third candidate cell, and a downlink frequency of the third candidate cell, the security key corresponding to the first candidate cell. The communication unit 903 is further configured to: receive data from the terminal device, and process the data of the terminal device based on the security key corresponding to the first candidate cell.

In a possible design, when configured to obtain the first key information and the second key information from the core network device based on the first request message, the processing unit 902 is specifically configured to: send a third request message to the core network device based on the first request message via the communication unit 903, where the third request message is for requesting the key information corresponding to the first candidate cell; and receive the first key information and the second key information from the core network device via the communication unit 903.

(2) The apparatus 900 may be the first access network device in the foregoing embodiments. The processing unit 902 may support the apparatus 900 in performing an action of the first access network device in Embodiment 1 or Embodiment 3. Alternatively, the processing unit 902 mainly performs an internal action of the first access network device in the method examples, and the communication unit 903 may support communication between the apparatus 900 and another device.

For example, in an embodiment, the communication unit 903 is configured to: send a first request message to a second access network device, where the first request message is for requesting a configuration of a first candidate cell; and receive a first response message from the second access network device, where the first response message includes the configuration of the first candidate cell and first key information, and the first key information corresponds to the first candidate cell.

In a possible design, the communication unit 903 is further configured to: send a second request message to the second access network device, where the second request message is for requesting a configuration of a second candidate cell; and receive the configuration of the second candidate cell and first indication information from the second access network device, where the first indication information indicates key information corresponding to the second candidate cell, and the key information corresponding to the second candidate cell is the same as key information corresponding to the first candidate cell.

In a possible design, the first request message includes key request information, and the key request information is for requesting the second access network device to obtain a security key corresponding to the first candidate cell.

In a possible design, the key request information includes information about a third candidate cell, the information about the third candidate cell is for obtaining the security key corresponding to the first candidate cell, and the third candidate cell is the same as or different from the first candidate cell.

In a possible design, the first response message further includes information about a third candidate cell corresponding to the first key information, the information about the third candidate cell is for obtaining the security key corresponding to the first candidate cell, and the third candidate cell is the same as or different from the first candidate cell.

In a possible design, the communication unit 903 is further configured to send information about a first list, the first key information, and second indication information to a terminal device, where the first list includes identifiers of a plurality of candidate cells, the plurality of candidate cells include the first candidate cell, the first list corresponds to the first key information, and the second indication information indicates that an input parameter for key derivation corresponds to the first candidate cell; and send a first handover message to the terminal device, where the first handover message indicates the terminal device to switch to a candidate cell in the first list.

In a possible design, the communication unit 903 is further configured to send a second handover message to the second access network device, where the second handover message indicates that switching to the candidate cell in the first list has been initiated.

(3) The apparatus 900 may be the terminal in the foregoing embodiments. The processing unit 902 may support the apparatus 900 in performing an action of the terminal device in Embodiment 1 or Embodiment 3. Alternatively, the processing unit 902 mainly performs an internal action of the terminal device in the method examples, and the communication unit 903 may support communication between the apparatus 900 and another device.

For example, in an embodiment, the communication unit 903 is configured to: receive information about a first list, first key information, and second indication information from a first access network device, where the first list includes identifiers of a plurality of candidate cells, the plurality of candidate cells include a first candidate cell, and the second indication information indicates that an input parameter for key derivation corresponds to the first candidate cell; receive a first handover message from the first access network device, where the first handover message indicates the terminal device to switch to a candidate cell in the first list; access the candidate cell in the first list; and derive, based on the first key information and the second indication information, a security key corresponding to the first candidate cell. The processing unit 902 is configured to communicate with a second access network device in the candidate cell in the first list based on the security key.

In a possible design, when configured to derive, based on the first key information and the second indication information, the security key corresponding to the first candidate cell, the processing unit 902 is specifically configured to derive, based on second key information corresponding to the first key information, a PCI of the first candidate cell, and a downlink frequency of the first candidate cell, the security key corresponding to the first candidate cell.

(4) The apparatus 900 may be the core network device (for example, the AMF) in the foregoing embodiments. The processing unit 902 may support the apparatus 900 in performing an action of the core network device (for example, the AMF) in Embodiment 1 or Embodiment 2. Alternatively, the processing unit 902 mainly performs an internal action of the core network device in the method examples, and the communication unit 903 may support communication between the apparatus 900 and another device.

For example, in an embodiment, the communication unit 903 is configured to: receive a third request message from a second access network device, where the third request message is for requesting key information; and send first key information and second key information to the second access network device, where the first key information identifies the second key information, and the second key information is used for security protection of data between a terminal device and the second access network device.

In a possible design, the third request message further includes information about a third candidate cell corresponding to the first key information, the information about the third candidate cell is for obtaining a security key corresponding to a first candidate cell, and the third candidate cell is the same as or different from the first candidate cell.

(5) The apparatus 900 may be the first access network device in the foregoing embodiments. The processing unit 902 may support the apparatus 900 in performing an action of the first access network device in Embodiment 2 or Embodiment 4. Alternatively, the processing unit 902 mainly performs an internal action of the first access network device in the method examples, and the communication unit 903 may support communication between the apparatus 900 and another device.

For example, in an embodiment, the communication unit 903 is configured to: send a first request message to a second access network device, where the first request message is for requesting a configuration of a first candidate cell, and the first request message further indicates key information corresponding to the first candidate cell; and receive the configuration of the first candidate cell from the second access network device.

In a possible design, the communication unit 903 is further configured to: send a second request message to the second access network device, where the second request message is for requesting a configuration of a second candidate cell; and receive the configuration of the second candidate cell and first indication information from the second access network device, where the first indication information indicates key information corresponding to the second candidate cell, and the key information corresponding to the second candidate cell is the same as key information corresponding to the first candidate cell.

In a possible design, the first request message includes a first security key corresponding to the first candidate cell and information about a cell corresponding to the first security key, and the first security key corresponding to the first candidate cell and the information about the cell corresponding to the first security key indicate the key information corresponding to the first candidate cell.

In a possible design, the cell corresponding to the first security key is the first candidate cell, and the processing unit 902 is configured to derive the first security key based on second key information corresponding to first key information, a PCI of the first candidate cell, and a downlink frequency of the first candidate cell, where the first key information identifies the second key information, the second key information is used for security protection of data between a terminal device and the second access network device, and the first key information and the second key information correspond to the first candidate cell.

In a possible design, the communication unit 903 is further configured to: send a third request message to a core network device, where the third request message is for requesting the key information corresponding to the first candidate cell; and receive the first key information and the second key information from the core network device; or the processing unit 902 is configured to determine key information corresponding to a second security key as the first key information, where the second security key corresponds to a source cell.

In a possible design, the first request message further includes the first key information.

In a possible design, the communication unit 903 is further configured to send information about a first list, the first key information, and second indication information to a terminal device, where the first list includes identifiers of a plurality of candidate cells, the plurality of candidate cells include the first candidate cell, the first list corresponds to the first key information, and the second indication information indicates that an input parameter for key derivation corresponds to the first candidate cell; and send a first handover message to the terminal device, where the first handover message indicates the terminal device to switch to a candidate cell in the first list.

In a possible design, the cell corresponding to the first security key is the first candidate cell, and the processing unit 902 is further configured to derive the first security key based on second key information, a PCI of the first candidate cell, and a downlink frequency of the first candidate cell, where the second key information is jointly identified by first key information and first extended key information, the second key information is used for security protection of data between a terminal device and the second access network device, and the first key information and the second key information correspond to the first candidate cell.

In a possible design, the communication unit 903 is further configured to: send a third request message to a core network device, where the third request message is for requesting the key information corresponding to the first candidate cell; and receive the first key information, the first extended key information, and the second key information from the core network device; or the processing unit 902 is configured to determine key information corresponding to a second security key as the first key information, where the second security key corresponds to a source cell.

In a possible design, the first request message further includes the first key information and the first extended key information.

In a possible design, the communication unit 903 is further configured to: send information about a first list, the first key information, the first extended key information, and second indication information to the terminal device, where the first list includes identifiers of a plurality of candidate cells, the plurality of candidate cells include the first candidate cell, the first list corresponds to the first key information and the first extended key information, and the second indication information indicates that an input parameter for key derivation corresponds to the first candidate cell; and send a first handover message to the terminal device, where the first handover message indicates the terminal device to switch to a candidate cell in the first list.

In a possible design, the communication unit 903 is further configured to send a second handover message to the second access network device, where the second handover message indicates that switching to the candidate cell in the first list has been initiated.

(6) The apparatus 900 may be the second access network device in the foregoing embodiments. The processing unit 902 may support the apparatus 900 in performing an action of the second access network device in Embodiment 2 or Embodiment 4. Alternatively, the processing unit 902 mainly performs an internal action of the second access network device in the method examples, and the communication unit 903 may support communication between the apparatus 900 and another device.

For example, in an embodiment, the communication unit 903 is configured to: receive a first request message from a first access network device, where the first request message is for requesting a configuration of a first candidate cell, and the first request message further indicates key information corresponding to the first candidate cell; and send the configuration of the first candidate cell to the first access network device.

In a possible design, the communication unit 903 is further configured to: receive a second request message from the first access network device, where the second request message is for requesting a configuration of a second candidate cell; and send, to the first access network device, the configuration of the second candidate cell and first indication information, where the first indication information indicates key information corresponding to the second candidate cell, and the key information corresponding to the second candidate cell is the same as key information corresponding to the first candidate cell.

In a possible design, the first request message includes a first security key corresponding to the first candidate cell and information about a cell corresponding to the first security key, and the first security key corresponding to the first candidate cell and the information about the cell corresponding to the first security key indicate the key information corresponding to the first candidate cell.

In a possible design, the first request message further includes first key information, where the first key information identifies second key information, and the second key information is used for security protection of data between a terminal device and the second access network device.

In a possible design, the first request message further includes first key information and first extended key information, where the first key information and the first extended key information are for jointly identifying second key information, and the second key information is used for security protection of data between a terminal device and the second access network device.

In a possible design, the communication unit 903 is further configured to receive a second handover message from the first access network device, where the second handover message indicates that switching to a candidate cell included by the second access device has been initiated.

In a possible design, the communication unit 903 is further configured to: send a fourth request message to a core network device; and receive third key information and fourth key information from the core network device, where the third key information identifies the fourth key information, and the fourth key information is used for security protection of data between the terminal device and a third access network device.

In a possible design, the communication unit 903 is further configured to: send a fourth request message to a core network device; and receive third key information, second extended key information, and fourth key information from the core network device, where the third key information and the second extended key information are for identifying the fourth key information, and the fourth key information is used for security protection of data between the terminal device and a third access network device.

(7) The apparatus 900 may be the terminal in the foregoing embodiments. The processing unit 902 may support the apparatus 900 in performing an action of the terminal device in Embodiment 2 or Embodiment 4. Alternatively, the processing unit 902 mainly performs an internal action of the terminal device in the method examples, and the communication unit 903 may support communication between the apparatus 900 and another device.

For example, in an embodiment, the communication unit 903 is configured to: receive information about a first list, first key information, and second indication information from a first access network device, where the first list includes identifiers of a plurality of candidate cells, the plurality of candidate cells include a first candidate cell, and the second indication information indicates that an input parameter for key derivation corresponds to the first candidate cell; and receive a first handover message from the first access network device, where the first handover message indicates the terminal device to switch to a candidate cell in the first list. The processing unit 902, configured to: access the candidate cell in the first list; derive, based on the first key information and the second indication information, a security key corresponding to the first candidate cell; and communicate with a second access network device in the candidate cell in the first list based on the security key.

In a possible design, when configured to derive, based on the first key information and the second indication information, the security key corresponding to the first candidate cell, the processing unit 902 is specifically configured to derive, based on second key information corresponding to the first key information, a PCI of the first candidate cell, and a downlink frequency of the first candidate cell, the security key corresponding to the first candidate cell.

(8) The apparatus 900 may be the terminal in the foregoing embodiments. The processing unit 902 may support the apparatus 900 in performing an action of the terminal device in Embodiment 2 or Embodiment 4. Alternatively, the processing unit 902 mainly performs an internal action of the terminal device in the method examples, and the communication unit 903 may support communication between the apparatus 900 and another device.

For example, in an embodiment, the communication unit 903 is configured to receive information about a first list, first key information, first extended key information, and second indication information from a first access network device, where the first list includes identifiers of a plurality of candidate cells, the plurality of candidate cells include a first candidate cell, and the second indication information indicates that an input parameter for key derivation corresponds to the first candidate cell; and receive a first handover message from the first access network device, where the first handover message indicates the terminal device to switch to a candidate cell in the first list. The processing unit 902 is configured to: access the candidate cell in the first list; derive, based on the first key information, the first extended key information, and the second indication information, a security key corresponding to the first candidate cell; and communicate with a second access network device in the candidate cell in the first list based on the security key.

In a possible design, when configured to derive, based on the first key information, the first extended key information, and the second indication information, the security key corresponding to the first candidate cell, the processing unit 902 is specifically configured to derive, based on the second key information, a PCI of the first candidate cell, and a downlink frequency of the first candidate cell, the security key corresponding to the first candidate cell, where the second key information is jointly identified by the first key information and the first extended key information.

(9) The apparatus 900 may be the terminal in the foregoing embodiments. The processing unit 902 may support the apparatus 900 in performing an action of the terminal device in Embodiment 2 or Embodiment 4. Alternatively, the processing unit 902 mainly performs an internal action of the terminal device in the method examples, and the communication unit 903 may support communication between the apparatus 900 and another device.

For example, in an embodiment, the communication unit 903 is configured to: receive a third request message from a first access network device, where the third request message is for requesting key information corresponding to the first candidate cell; and send first key information and second key information to the first access network device, where the first key information identifies the second key information, and the second key information is used for security protection of data between the terminal device and the second access network device.

Alternatively, in another embodiment, the communication unit 903 is configured to: receive a third request message from a first access network device, where the third request message is for requesting key information corresponding to the first candidate cell; and send first key information, first extended key information, and second key information to the first access network device, where the first key information and the first extended key information are for jointly identifying the second key information, and the second key information is used for security protection of data between the terminal device and the second access network device.

Alternatively, in an embodiment, the communication unit 903 is configured to: receive a fourth request message from a second access network device, where the fourth request message is for requesting key information; and send third key information and fourth key information to a first access network device, where the third key information identifies the fourth key information, and the fourth key information is used for security protection of data between the terminal device and a third access network device.

Alternatively, in another embodiment, the communication unit 903 is configured to: receive a fourth request message from a second access network device, where the fourth request message is for requesting key information; and send third key information, second extended key information, and fourth key information to a first access network device, where the third key information and the second extended key information are for jointly identifying the fourth key information, and the fourth key information is used for security protection of data between the terminal device and a third access network device.

It should be understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware, or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field-programmable gate arrays (field-programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

Based on the foregoing embodiments, an embodiment of this application further provides a communication apparatus. Refer to FIG. 10. A communication apparatus 1000 may include a transceiver 1001 and a processor 1002. Optionally, the communication apparatus 1000 may further include a memory 1003. The memory 1003 may be disposed inside the communication apparatus 1000, or may be disposed outside the communication apparatus 1000. The processor 1002 may control the transceiver 1001 to receive and send messages and the like.

Specifically, the processor 1002 may be a central processing unit (central processing unit, CPU), a network processor (network processor, NP), or a combination of a CPU and an NP. The processor 1002 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1001, the processor 1002, and the memory 1003 are interconnected. Optionally, the transceiver 1001, the processor 1002, and the memory 1003 are connected to each other through a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 10, but this does not mean that there is only one bus or only one type of bus.

In an optional implementation, the memory 1003 is configured to store a program and the like. Specifically, the program may include program code, and the program code includes computer operation instructions. The memory 1003 may include a RAM, and may further include a non-volatile memory (non-volatile memory), for example, one or more disk memories. The processor 1002 executes the application program stored in the memory 1003, to implement the foregoing function, thereby implementing a function of the communication apparatus 1000.

For example, the communication apparatus 1000 may be the first DU in the foregoing embodiments, or may be the second DU in the foregoing embodiments.

In an embodiment, when the communication apparatus 1000 implements a function of the first DU in the foregoing method embodiments, the transceiver 1001 may implement a receiving/sending operation performed by the first DU in the foregoing method embodiments, and the processor 1002 may implement an operation other than the receiving/sending operation performed by the first DU in the foregoing method embodiments. Specifically, for related specific descriptions, refer to related descriptions in the foregoing embodiments. Details are not described herein again.

In another embodiment, when the communication apparatus 1000 implements a function of the second DU in the foregoing method embodiments, the transceiver 1001 may implement a receiving/sending operation performed by the second DU in the foregoing method embodiments, and the processor 1002 may implement an operation other than the receiving/sending operation performed by the second DU in the foregoing method embodiments. Specifically, for related specific descriptions, refer to related descriptions in the foregoing embodiments. Details are not described herein again.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, applied to a second access network device, and comprising:
receiving a first request message from a first access network device, wherein the first request message is for requesting a configuration of a first candidate cell;
obtaining first key information and second key information from a core network device based on the first request message, wherein the first key information identifies the second key information, the second key information is used for security protection of data between a terminal device and the second access network device, and the first key information and the second key information correspond to the first candidate cell; and
sending a first response message to the first access network device, wherein the first response message comprises the configuration of the first candidate cell and the first key information.

2. The method according to claim 1, wherein the method further comprises:
receiving a second request message from the first access network device, wherein the second request message is for requesting a configuration of a second candidate cell; and
sending, to the first access network device, the configuration of the second candidate cell and first indication information, wherein the first indication information indicates key information corresponding to the second candidate cell, and the key information corresponding to the second candidate cell is the same as key information corresponding to the first candidate cell.

3. The method according to claim 1 or 2, wherein the first request message comprises key request information, and the key request information is for requesting the second access network device to obtain a security key corresponding to the first candidate cell.

4. The method according to claim 3, wherein the key request information comprises information about a third candidate cell, the information about the third candidate cell is for obtaining the security key corresponding to the first candidate cell, and the third candidate cell is the same as or different from the first candidate cell.

5. The method according to any one of claims 1 to 3, wherein the first response message further comprises information about a third candidate cell corresponding to the first key information, the information about the third candidate cell is for obtaining the security key corresponding to the first candidate cell, and the third candidate cell is the same as or different from the first candidate cell.

6. The method according to claim 4 or 5, wherein the method further comprises:
deriving, based on the second key information, a PCI of the third candidate cell, and a downlink frequency of the third candidate cell, the security key corresponding to the first candidate cell; and
receiving data from the terminal device, and processing the data of the terminal device based on the security key corresponding to the first candidate cell.

7. The method according to any one of claims 1 to 3, wherein obtaining the first key information and the second key information from the core network device based on the first request message comprises:
sending a third request message to the core network device based on the first request message, wherein the third request message is for requesting the key information corresponding to the first candidate cell; and
receiving the first key information and the second key information from the core network device.

8. A communication method, applied to a first access network device, wherein the method comprises:
sending a first request message to a second access network device, wherein the first request message is for requesting a configuration of a first candidate cell; and
receiving a first response message from the second access network device, wherein the first response message comprises the configuration of the first candidate cell and first key information, and the first key information corresponds to the first candidate cell.

9. The method according to claim 8, wherein the method further comprises:
sending a second request message to the second access network device, wherein the second request message is for requesting a configuration of a second candidate cell; and
receiving the configuration of the second candidate cell and first indication information from the second access network device, wherein the first indication information indicates key information corresponding to the second candidate cell, and the key information corresponding to the second candidate cell is the same as key information corresponding to the first candidate cell.

10. The method according to claim 8 or 9, wherein the first request message comprises key request information, and the key request information is for requesting the second access network device to obtain a security key corresponding to the first candidate cell.

11. The method according to claim 10, wherein the key request information comprises information about a third candidate cell, the information about the third candidate cell is for obtaining the security key corresponding to the first candidate cell, and the third candidate cell is the same as or different from the first candidate cell.

12. The method according to any one of claims 8 to 10, wherein the first response message further comprises information about a third candidate cell corresponding to the first key information, the information about the third candidate cell is for obtaining the security key corresponding to the first candidate cell, and the third candidate cell is the same as or different from the first candidate cell.

13. The method according to any one of claims 8 to 12, wherein the method further comprises:
sending information about a first list, the first key information, and second indication information to a terminal device, wherein the first list comprises identifiers of a plurality of candidate cells, the plurality of candidate cells comprise the first candidate cell, the first list corresponds to the first key information, and the second indication information indicates that an input parameter for key derivation corresponds to the first candidate cell; and
sending a first handover message to the terminal device, wherein the first handover message indicates the terminal device to switch to a candidate cell in the first list.

14. The method according to claim 13, wherein the method further comprises:
sending a second handover message to the second access network device, wherein the second handover message indicates that switching to the candidate cell in the first list has been initiated.

15. A communication method, applied to a terminal device, and comprising:
receiving information about a first list, first key information, and second indication information from a first access network device, wherein the first list comprises identifiers of a plurality of candidate cells, the plurality of candidate cells comprise a first candidate cell, and the second indication information indicates that an input parameter for key derivation corresponds to the first candidate cell;
receiving a first handover message from the first access network device, wherein the first handover message indicates the terminal device to switch to a candidate cell in the first list;
accessing the candidate cell in the first list; and deriving, based on the first key information and the second indication information, a security key corresponding to the first candidate cell; and
communicating with a second access network device in the candidate cell in the first list based on the security key.

16. The method according to claim 15, wherein deriving, based on the first key information and the second indication information, the security key corresponding to the first candidate cell comprises:
deriving, based on second key information corresponding to the first key information, a PCI of the first candidate cell, and a downlink frequency of the first candidate cell, the security key corresponding to the first candidate cell.

17. A communication method, applied to a first access network device, wherein the method comprises:
sending a first request message to a second access network device, wherein the first request message is for requesting a configuration of a first candidate cell, and the first request message further indicates key information corresponding to the first candidate cell; and
receiving the configuration of the first candidate cell from the second access network device.

18. The method according to claim 17, wherein the first request message comprises a first security key corresponding to the first candidate cell and information about a cell corresponding to the first security key, and the first security key corresponding to the first candidate cell and the information about the cell corresponding to the first security key indicate the key information corresponding to the first candidate cell.

19. The method according to claim 18, wherein the cell corresponding to the first security key is the first candidate cell, and the method further comprises:
deriving the first security key based on second key information corresponding to first key information, a PCI of the first candidate cell, and a downlink frequency of the first candidate cell, wherein the first key information identifies the second key information, the second key information is used for security protection of data between a terminal device and the second access network device, and the first key information and the second key information correspond to the first candidate cell.

20. The method according to claim 19, wherein the method further comprises:
sending a third request message to a core network device, wherein the third request message is for requesting the key information corresponding to the first candidate cell; and
receiving the first key information and the second key information from the core network device; or
determining key information corresponding to a second security key as the first key information, wherein the second security key corresponds to a source cell.

21. The method according to claim 18, wherein the cell corresponding to the first security key is the first candidate cell, and the method further comprises:
deriving the first security key based on second key information, a PCI of the first candidate cell, and a downlink frequency of the first candidate cell, wherein the second key information is jointly identified by first key information and first extended key information, the second key information is used for security protection of data between a terminal device and the second access network device, and the first key information and the second key information correspond to the first candidate cell.

22. A communication method, applied to a second access network device, wherein the method comprises:
receiving a first request message from a first access network device, wherein the first request message is for requesting a configuration of a first candidate cell, and the first request message further indicates key information corresponding to the first candidate cell; and
sending the configuration of the first candidate cell to the first access network device.

23. The method according to claim 22, wherein the method further comprises:
sending a fourth request message to a core network device; and
receiving third key information and fourth key information from the core network device, wherein the third key information identifies the fourth key information, and the fourth key information is used for security protection of data between a terminal device and a third access network device; or
receiving third key information, second extended key information, and fourth key information from the core network device, wherein the third key information and the second extended key information are for jointly identifying the fourth key information, and the fourth key information is used for security protection of data between a terminal device and a third access network device.

24. A communication method, applied to a terminal device, wherein the method comprises:
receiving information about a first list, first key information, and second indication information from a first access network device, wherein the first list comprises identifiers of a plurality of candidate cells, the plurality of candidate cells comprise a first candidate cell, and the second indication information indicates that an input parameter for key derivation corresponds to the first candidate cell;
receiving a first handover message from the first access network device, wherein the first handover message indicates the terminal device to switch to a candidate cell in the first list;
accessing the candidate cell in the first list; and deriving, based on the first key information and the second indication information, a security key corresponding to the first candidate cell; and
communicating with a second access network device in the candidate cell in the first list based on the security key.

25. A communication method, applied to a terminal device, wherein the method comprises:
receiving information about a first list, first key information, first extended key information, and second indication information from a first access network device, wherein the first list comprises identifiers of a plurality of candidate cells, the plurality of candidate cells comprise a first candidate cell, and the second indication information indicates that an input parameter for key derivation corresponds to the first candidate cell;
receiving a first handover message from the first access network device, wherein the first handover message indicates the terminal device to switch to a candidate cell in the first list;
accessing the candidate cell in the first list; and deriving, based on the first key information, the first extended key information, and the second indication information, a security key corresponding to the first candidate cell; and
communicating with a second access network device in the candidate cell in the first list based on the security key.

26. A communication apparatus, comprising a module configured to perform the method according to any one of claims 1 to 25.

27. A communication apparatus, comprising a processor, wherein the processor is coupled to a memory, the memory stores a computer program, and the processor is configured to invoke the computer program in the memory, to enable the communication apparatus to perform the method according to any one of claims 1 to 25.

28. A communication system, wherein the communication system comprises a first communication apparatus, a second communication apparatus, and a third communication apparatus, wherein the first communication apparatus is configured to perform the method according to any one of claims 1 to 7, the second communication apparatus is configured to perform the method according to any one of claims 8 to 14, and the third communication apparatus is configured to perform the method according to claim 15 or 16; or the first communication apparatus is configured to perform the method according to any one of claims 17 to 21, the second communication apparatus is configured to perform the method according to claim 22 or 23, and the third communication apparatus is configured to perform the method according to claim 24 or 25.

29. A computer-readable storage medium, wherein the storage medium stores a computer program or instructions; and when the computer program or the instructions are executed by a computer, the method according to any one of claims 1 to 25 is implemented.

30. A computer program product, wherein when a computer reads and executes the computer program product, the computer is enabled to perform the method according to any one of claims 1 to 25.
